(19) Europäisches Patentamt
European Patent Office
Office européen des brevets

(11) EP 4 660 248 A1

(12) **EUROPEAN PATENT APPLICATION**
published in accordance with Art. 153(4) EPC

(43) Date of publication:
**10.12.2025 Bulletin 2025/50**

(21) Application number: **24750416.0**

(22) Date of filing: **02.02.2024**

(51) International Patent Classification (IPC):
***C08L 83/04*** *(2006.01)* ***C08G 77/38*** *(2006.01)*

(52) Cooperative Patent Classification (CPC):
**C08G 77/38; C08L 83/04**

(86) International application number:
**PCT/JP2024/003486**

(87) International publication number:
**WO 2024/162467 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2023 JP 2023014920**
**02.02.2023 JP 2023014923**

(71) Applicant: **Sekisui Chemical Co., Ltd.**
**Osaka-shi, Osaka 530-8565 (JP)**

(72) Inventors:
- **KADOWAKI, Kazuki**
  **Mishima-gun, Osaka 618-0021 (JP)**
- **ISHIDA, Hiroya**
  **Mishima-gun, Osaka 618-0021 (JP)**
- **KANMURI, Shuhei**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

(54) **SILICONE RESIN COMPOSITION**

(57) A silicone resin composition comprising a filler (A) having a six-membered ring atomic structure as a structural unit, an organopolysiloxane (B) having a structure represented by the following formula (1), an organopolysiloxane (C) having a structure different from the organopolysiloxane (B):

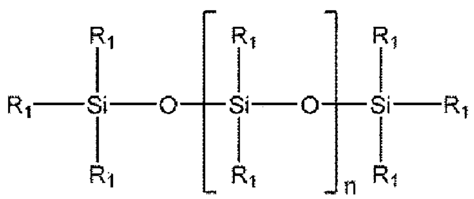

(1)

wherein each $R_1$ is independently a group represented by A-B, a monovalent hydrocarbon group having 1 to 4 carbon atoms, or a hydrogen atom, at least one $R_1$ is a group represented by A-B and at least one $R_1$ is a hydrocarbon group among a plurality of $R_1$, A is a divalent organic group bonded to a silicon atom, and B has three or more and six or less conjugated aromatic six-membered rings, any one atom at the $\alpha$-position, the $\beta$-position, and the $\gamma$-position is a heteroatom among atoms constituting A, and n is an integer of 1 or more.

EP 4 660 248 A1

## Description

### Technical Field

The present invention relates to a silicone resin composition containing a filler and an organopolysiloxane.

### Background Art

In recent years, countermeasures against heat are important for electronic devices due to an increase in the amount of heat generation along with an increase in the integration of circuits, and thus, the demand for heat radiation materials is increasing. In general, a heat radiation material is formed of a resin composition containing a resin and a filler. In the resin composition containing a resin and a filler, the function of the material may be impaired, for example, the flexibility of the composition may deteriorate due to the low compatibility between the resin and the filler. To improve the low compatibility between the resin and the filler, a method for adding an additive having an affinity with both the resin and the filler and a method for adding an additive for improving the dispersing ability to the resin are known.

Meanwhile, as the filler used in the heat radiation material, fillers having a six-membered ring atomic structure, such as hexagonal boron nitride (h-BN), graphite, and carbon nanotubes, are widely known. For the filler having a six-membered ring atomic structure, use of various treatment agents is attempted to improve the compatibility with the resin and the dispersing ability to the resin.

For example, as the treatment agent for improving the dispersing ability of nanocarbon, Patent Literature 1 discloses an organopolysiloxane having a polycyclic aromatic group at one end, which has an aromatic condensed ring group. Then, an example using an organopolysiloxane having a pyrene group as the aromatic condensed ring group is specifically disclosed in Examples. The organopolysiloxane having an aromatic condensed ring group is considered to be capable of improving the dispersing ability by utilizing the $\pi$-$\pi$ interaction with nanocarbon.

Patent Literature 2 discloses a specific organopolysiloxane that has a monovalent hydrocarbon group having a plurality of aromatic rings and 10 or more carbon atoms. As the monovalent hydrocarbon group having 10 or more carbon atoms, a naphthyl ring or the like is used. Patent Literature 2 discloses that the organopolysiloxane is useful as a surface treatment agent of various functional fillers such as boron nitride and graphite and can be formulated in a resin composition in a large amount without impairing the handleability and dispersion stability of various functional fillers.

### Citation List

#### Patent Literature

PTL1: JP 2018-197300 A

PTL2: JP 2016-534161 W

### Summary of Invention

#### Technical Problem

However, the flexibility is reduced in the compositions described in Patent Literatures 1 and 2 in which a treatment agent is added, which is problematic.

Thus, an object of the present invention is to provide a resin composition having a high flexibility by enhancing the dispersing ability of a filler having a six-membered ring atomic structure as a structural unit.

#### Solution to Problem

The present inventors have studied the cause of the reduction in flexibility in use of a conventional treatment agent having a plurality of aromatic rings such as polycyclic aromatic groups, and as a result, found out that the self-aggregation force of the treatment agent itself reduces the flexibility of the composition containing the treatment agent. Then, it has been found that, by containing an organopolysiloxane (B) having a specific structure and an organopolysiloxane (C) having a structure different from the component (B) together with a filler (A) having a six-membered ring atomic structure as a structural unit in a resin composition, the dispersing ability of the filler can be enhanced while suppressing the self-aggregation of the component (B) and the above problem can be solved, thereby completing the

following present invention.

That is, the present invention relates to [1] to [12] below.

[1] A silicone resin composition comprising a filler (A) having a six-membered ring atomic structure as a structural unit, an organopolysiloxane (B) having a structure represented by the following formula (1), and an organopolysiloxane (C) having a structure different from the organopolysiloxane (B):

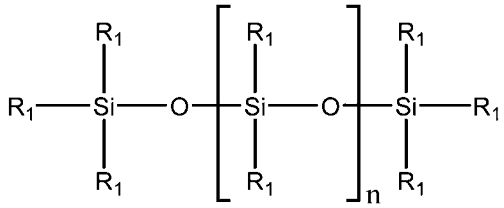

Formula (1)

wherein each $R_1$ is independently a group represented by A-B, a monovalent hydrocarbon group having 1 to 4 carbon atoms, or a hydrogen atom,
at least one $R_1$ is a group represented by A-B and at least one $R_1$ is a hydrocarbon group among a plurality of $R_1$,
A is a divalent organic group bonded to a silicon atom, and B has three or more and six or less conjugated aromatic six-membered rings,
in a case of an atom bonded to the aromatic six-membered ring contained in B being defined as an $\alpha$-position atom, an atom bonded to the $\alpha$-position atom being defined as a $\beta$-position atom, and an atom bonded to the $\beta$-position atom other than the $\alpha$-position atom being defined as a $\gamma$-position atom among atoms constituting A, any of the $\alpha$-position atom, the $\beta$-position atom, and the $\gamma$-position atom is a heteroatom, and
the letter of n is an integer of 1 or more.

[2] The silicone resin composition according to the above [1], wherein the organopolysiloxane (B) has a structure represented by the following formula (2):

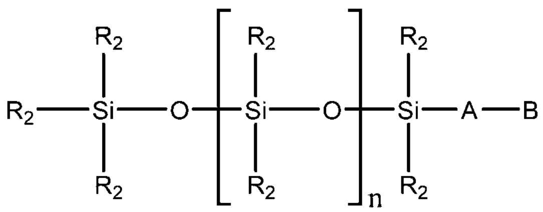

Formula (2)

wherein $R_2$ is a monovalent hydrocarbon group having 1 to 4 carbon atoms or a hydrogen atom, A, B, and the letter of n have the same meanings as those in the formula (1), and at least one $R_2$ among a plurality of $R_2$ is a hydrocarbon group.
[3] The silicone resin composition according to the above [1], wherein the organopolysiloxane (B) has a structure represented by the following formula (3):

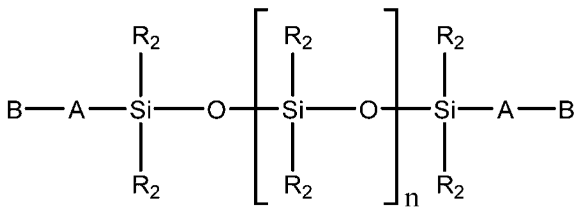

Formula (3)

wherein $R_2$ is a monovalent hydrocarbon group having 1 to 4 carbon atoms or a hydrogen atom, A, B, and the letter of n have the same meanings as those in the formula (1), and at least one $R_2$ among a plurality of $R_2$ is a hydrocarbon group.
[4] The silicone resin composition according to the above [1], wherein the organopolysiloxane (B) has a structure represented by the following formula (4):

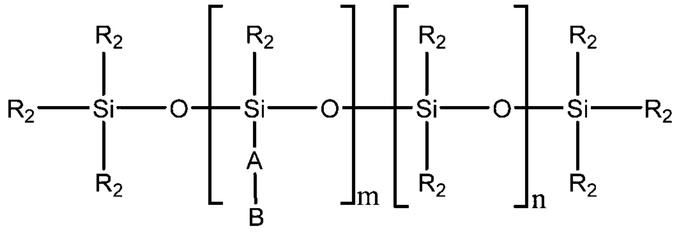

Formula (4)

wherein $R_2$ is a monovalent hydrocarbon group having 1 to 4 carbon atoms or a hydrogen atom, the letter of m is an integer of 1 or more and 10 or less, A, B, and the letter of n have the same meanings as those in the formula (1), and at least one $R_2$ among a plurality of $R_2$ is a hydrocarbon group.

[5] The silicone resin composition according to the above [4], wherein the letter of m is 1 or 2.

[6] The silicone resin composition according to any one of the above [1] to [5], wherein B is a condensed ring compound.

[7] The silicone resin composition according to the above [6], wherein B contains a pyrene substituent or a perylene substituent.

[8] The silicone resin composition according to any one of the above [1] to [7], wherein A has 10 or less carbon atoms.

[9] The silicone resin composition according to any one of the above [1] to [8], wherein a value X calculated by the following equation is $1 \times 10^{-6}$ or more and $1 \times 10^{-4}$ or less:

X = {(the number of conjugated aromatic rings per molecule of component (B)) ÷ (number-average molecular weight of component (B)) × (content of component (B) [parts by mass])} ÷ {(specific surface area of component (A) [$cm^2/g$]) × (content of component (A) [parts by mass])}

[10] The silicone resin composition according to any one of the above [1] to [9], comprising a filler (D) selected from the group consisting of a metal oxide filler and a metal filler.

[11] The silicone resin composition according to any one of the above [1] to [10], wherein the organopolysiloxane resin (C) is at least one of an organopolysiloxane having an alkenyl group and an organopolysiloxane having a hydrosilyl group.

[12] The silicone resin composition according to any one of the above [1] to [11], wherein

the filler (A) has π electrons, and
a solubility index Ra and a polarity parameter term δP between two components calculated by Hansen solubility parameters (HSP) satisfy the following requirements (1) and (2):

requirement (1):
Ra(D/R) as a compatibility index of the organopolysiloxane (B) with the organopolysiloxane (C) is 0.01 or more and 10.0 or less, and Ra(D/F) as a compatibility index of the filler (A) with the organopolysiloxane (B) is 8.6 or more and 30.0 or less, and
requirement (2):
a difference in polar term δP between the organopolysiloxane (B) and the organopolysiloxane (C) (|δPR-D|) is 4.2 or less.

In another aspect of the present invention, [13] to [17] below are provided. In another aspect of the present invention, an object is to provide a resin composition having an excellent flexibility by enhancing the dispersing ability of a filler having π electrons and a six-membered ring atomic structure as a structural unit.

In another aspect, the present inventors have intensively studied, and as a result, found that the dispersant comprising conjugated aromatic ring units can impart a favorable dispersing ability to the filler having π electrons and a six-membered ring structure as a structural unit, whereas the flexibility may be deteriorated due to the self-aggregation caused by the interaction between aromatic ring units. It has also been found that the physicochemical force of attraction acting between molecules due to a difference in polarity between the dispersant and a matrix resin and the like increases, so that the reduced mobility of molecules may reduce the flexibility, and the deteriorated compatibility between components may reduce the flexibility. Then, it has been found based on the above findings that the above problem can be solved by making the compatibility of the filler (A) with the dispersant (B) and the compatibility of the dispersant (B) with the organopolysiloxane resin (C) favorable in the resin composition, and by reducing the difference in polar term in the solubility parameter between the dispersant (B) and the organopolysiloxane resin (C), thereby completing the following present invention.

[13] A resin composition comprising a filler (A) having $\pi$ electrons and having a six-membered ring atomic structure as a structural unit, a dispersant (B) that is an organopolysiloxane, and an organopolysiloxane resin (C) having a structure different from the dispersant (B), a solubility index Ra and a polarity parameter term $\delta P$ between two components calculated by Hansen solubility parameters (HSP) satisfying the following requirements (1) and (2):

requirement (1):
$Ra_{(D/R)}$ as a compatibility index of the dispersant (B) with the organopolysiloxane resin (C) being 0.01 or more and 10.0 or less, and $Ra_{(D/F)}$ as a compatibility index of the filler (A) with the dispersant (B) being 8.6 or more and 30.0 or less, and
requirement (2):
a difference in polar term $\delta P$ between the dispersant (B) and the organopolysiloxane resin (C) ($|\delta P_{R-D}|$) being 4.2 or less.

[14] The resin composition according to the above [13], wherein the dispersant (B) has a conjugated aromatic moiety having three or more and six or less conjugated aromatic rings.
[15] The resin composition according to the above [13] or [14], wherein the dispersant (B) has a number-average molecular weight of 1000 or more and 16000 or less.
[16] The resin composition according to any one of the above [13] to [15], wherein the filler (A) comprises at least one selected from the group consisting of graphite, a carbon fiber, a carbon nanotube, and boron nitride.
[17] The resin composition according to any one of the above [13] to [16], wherein the organopolysiloxane resin (C) is a compound having no conjugated aromatic moiety having three or more and six or less conjugated aromatic six-membered rings.

Advantageous Effects of Invention

It is possible to provide a silicone resin composition having a high flexibility by enhancing the dispersing ability of a filler having a six-membered ring atomic structure as a structural unit.

Description of Embodiments

Hereinafter, the embodiments of the present invention will be described in detail.

<<First embodiment>>

[Filler (A)]

The silicone resin composition according to the first embodiment of the present invention contains a filler (A) having a six-membered ring atomic structure as a structural unit. When the silicone resin composition contains the filler having the above specific structure, the thermal conductivity of the silicone resin composition is easily improved. In the filler (A) having a six-membered ring atomic structure as a structural unit, the six-membered ring atomic structure has $\pi$ electrons.
Specific examples of the filler (A) include boron nitride in which a six-membered ring structure is formed of B (boron atoms) and N (nitrogen atoms), and a carbon material in which a six-membered ring structure is formed of C (carbon atoms).
Examples of boron nitride include hexagonal boron nitride, and more specific examples thereof include a boron nitride nanotube, a boron nitride nanosheet, and a hexagonal boron nitride particle.
The boron nitride nanotube (BNNT) is a tubular material formed of hexagonal boron nitride. An ideal structure of the boron nitride nanotube is any structure where a plane of six-membered ring networks forms a tube so as to be in parallel with a tube axis, and this forms a single tube or a multi-tube. The boron nitride nanotube as a single tube is referred to as a single-wall tube, and the boron nitride nanotube as a multi-tube is referred to as a multi-wall tube. Any of the single-wall tube and the multi-wall tube may be used as the boron nitride nanotube, or these may be used in combination.
For example, the boron nitride nanotube has an average diameter of 1 nm or more and 70 nm or less and an average length of 100 nm or more and 50 $\mu$m or less. By setting the average diameter and the average length within the above range, the thermal conductivity of the silicone resin composition is easily enhanced while making the flexibility of the silicone resin composition favorable.
The average diameter of the boron nitride nanotube is preferably 3 nm or more, and more preferably 4 nm or

more. The average diameter of the boron nitride nanotube is preferably 50 nm or less, more preferably 10 nm or less, and still more preferably 8 nm or less. The average length of the boron nitride nanotube is preferably 500 nm or more, and more preferably 1 μm or more, and preferably 20 μm or less, more preferably 8 μm or less, and still more preferably 5 μm or less.

The diameter of the boron nitride nanotube means the outer diameter in the case of a single-wall tube, and in the case of a multi-wall tube, it means the outer diameter of a tube positioned on the outermost side. The diameter and length of the boron nitride nanotube may be measured in an image obtained by observation using an electron microscope such as TEM (transmission electron microscope), and the average diameter and the average length may be determined by arithmetic means of arbitrary 50 boron nitride nanotubes. The same applies to the diameter and the length of the carbon nanotube mentioned later.

The boron nitride nanosheet is formed of boron nitride and has an ultrathin two-dimensional sheet structure, for example, a structure formed from a single layer or a plurality of laminated layers of hexagonal boron nitride. For example, one having an average thickness of 20 nm or less is used as the boron nitride nanosheet. From the viewpoint of enhancing the thermal conductivity while making the silicone resin composition sufficiently flexible, the boron nitride nanosheet preferably has an average thickness of less than 10 nm, more preferably 6 nm or less, and still more preferably 4 nm or less. The lower limit of the average thickness of the boron nitride nanosheet is not particularly limited, and is, for example, 1 nm.

The size of the boron nitride nanosheet is not particularly limited, and has, for example, an average longest diameter of 200 nm or more and 3 μm or less, and preferably 500 nm or more and 2 μm or less.

The thickness and longest diameter of the boron nitride nanosheet can be measured, for example, in an image obtained by observation using an electron microscope such as TEM (transmission electron microscope), and the average thickness and the average longest diameter of the boron nitride nanosheet may be determined by arithmetic means of arbitrary 50 boron nitride nanosheets in the image from the electron microscope. The same applies to the longest diameter and thickness of the carbon nanosheet mentioned later.

The hexagonal boron nitride particle is a particulate boron nitride particle other than the boron nitride nanosheet and the boron nitride nanotube. The shape thereof is not particularly limited, and the boron nitride particle may be in any shape such as scaly, spherical, a polygonal shape, and an indefinite shape. The hexagonal boron nitride particle may be an agglomerate in which a plurality of primary particles is aggregated.

The primary particle size of the hexagonal boron nitride particle is not particularly limited, and may be a nano size or a micro size. For example, the average primary particle size of the hexagonal boron nitride particle may be, for example, 5 nm or more and 100 μm or less, preferably 10 nm or more and 50 μm or less, and more preferably 0.1 μm or more and 40 μm or less.

The particle size of the agglomerate is also not particularly limited, and the average particle size of the agglomerate is, for example, 0.1 μm or more and 250 μm or less, more preferably 0.5 μm or more and 200 μm or less, and still more preferably 1 μm or more and 150 μm or less.

The primary particle size of the hexagonal boron nitride particle and the particle size of the agglomerate may be obtained by, for example, measuring the maximum particle size in an image obtained by observation using an electron microscope such as TEM (transmission electron microscope) or SEM (scanning electron microscope). The average particle size may be determined by an arithmetic mean of the maximum particle sizes of arbitrary 50 particles. The same applies to the graphite particle mentioned later.

The carbon material is not particularly limited, as long as it forms a six-membered ring structure with carbon atoms and the six-membered ring structure has π electrons. Examples thereof include a carbon fiber, a carbon nanotube, a carbon nanosheet, and graphite. Among them, a carbon fiber, a carbon nanotube, and graphite are preferable, and above all, a carbon fiber and graphite are preferable.

The carbon fiber is preferably graphitized carbon fiber. The graphitized carbon fiber has a high thermal conductivity in its fiber axis direction because crystal planes (that is, planes of six-membered ring networks) of graphite are arranged in the fiber axis direction. The graphitized carbon fiber preferably has a high degree of graphitization.

The fiber diameter of the graphitized carbon fiber is not particularly limited, and for example, the average diameter is 1 μm or more and 30 μm or less, and preferably 5 μm or more and 20 μm or less. When the fiber diameter is within the above range, the silicone resin composition is industrially easily produced and the thermal conductivity of the silicone resin composition is easily increased.

The average fiber length of the carbon fiber is, as described above, preferably 10 μm or more and 600 μm or less, more preferably 15 μm or more and 500 μm or less, and still more preferably 20 μm or more and 300 μm or less.

The average diameter and average fiber length of the carbon fiber may be measured for example, in an image obtained by observation using an electron microscope such as TEM (transmission electron microscope) or SEM (scanning electron microscope), and arithmetic means of the diameters and fiber lengths of arbitrary 50 carbon fibers may be determined as the average diameter and the average fiber length, respectively.

A carbon nanotube is a material having a structure in which a graphite sheet having hexagonal network arrangements of carbon atoms is wound into a cylindrical shape, and a carbon nanotube in which a graphite sheet is wound into a single layer is referred to as a single-walled carbon nanotube, and one in which graphite sheets are wound

into a multi-layer is referred to as a multi-walled carbon nanotube.

In the present invention, the type of the carbon nanotube is not particularly limited, and may be any of a single-walled carbon nanotube, a multi-walled carbon nanotube, and a combination thereof.

The average diameter of the carbon nanotube is preferably 1 nm or more and 100 nm or less, and more preferably 2 nm or more and 15 nm or less. The average length of the carbon nanotube is preferably 0.1 μm or more and 1000 μm or less, and more preferably 10 μm or more and 500 μm or less.

A carbon nanosheet has a structure in which hexagonal network arrangements of carbon atoms are arranged along the plane direction and has an ultrathin two-dimensional sheet structure, and has, for example, a structure formed from a single layer or a plurality of laminated layers of hexagonal network arrangements of carbon atoms.

The carbon nanosheet has, for example, an average thickness of 20 nm or less, and preferably 10 nm or less. The lower limit of the average thickness of the carbon nanosheet is not particularly limited, and is, for example, 0.7 nm. The size of the carbon nanosheet is not particularly limited, and has, for example, an average longest diameter of 0.2 μm or more and 3 μm or less, and preferably 5 μm or more and 2.5 μm or less.

Examples of graphite include a graphite particle. The graphite particle is a particle other than the carbon fiber, carbon nanotube, and carbon nanosheet described above. The shape thereof is not particularly limited, and the graphite particle may be in any shape such as scaly, spherical, a polygonal shape, and an indefinite shape. The graphite particle may be an agglomerate in which a plurality of primary particles is aggregated.

For example, the average primary particle size of the graphite particle may be, for example, 5 nm or more and 100 μm or less, preferably 10 nm or more and 50 μm or less, and more preferably 0.1 μm or more and 40 μm or less.

The particle size of the agglomerate is also not particularly limited, and the average particle size of the agglomerate is, for example, 0.1 μm or more and 250 μm or less, more preferably 0.5 μm or more and 200 μm or less, and still more preferably 1 μm or more and 150 μm or less.

The filler (A) may be used singly, or two or more may be used in combination.

The specific surface area of the filler (A) is not particularly limited, and is preferably 0.1 $cm^2/g$ or more and 1000 $cm^2/g$ or less, more preferably 0.3 $cm^2/g$ or more and 500 $cm^2/g$ or more, still more preferably 0.5 $cm^2/g$ or more and 300 $cm^2/g$ or less, and particularly preferably 0.6 $cm^2/g$ or more and 10 $cm^2/g$ or less.

By setting the specific surface area to the predetermined range, it is easy to make the particle size, length, and the like of the filler (A) suitable and suitably disperse the filler (A) into the silicone resin composition. In addition, it is also easy to moderately enhance the thermal conductivity while maintaining the flexibility of the silicone resin composition.

The specific surface area of the filler (A) is measured using an automated specific surface area/pore size distribution measurement apparatus (for example, "TriStarII" manufactured by SHIMADZU CORPORATION).

The filler (A) in the silicone resin composition preferably contains, among those described above, at least one selected from the group comprising graphite, a carbon fiber, a carbon nanotube, and boron nitride.

The content of the filler (A) in the silicone resin composition is, for example, 0.5% by mass or more and 99% by mass or less, preferably 10% by mass or more and 99% by mass or less, more preferably 20% by mass or more and 98% by mass or less, and still more preferably 30% by mass or more and 95% by mass or less, based on the total amount of the silicone resin composition. By setting the content of the filler (A) within the above range, thermal conductivity can be enhanced while maintaining the flexibility of the silicone resin composition.

[Organopolysiloxane (B)]

The silicone resin composition of the present invention contains an organopolysiloxane (B) having a structure represented by the following formula (1):

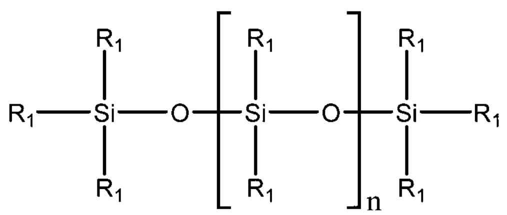

Formula (1)

wherein each $R_1$ is independently a group represented by A-B, a monovalent hydrocarbon group having 1 to 4 carbon atoms, or a hydrogen atom,

at least one $R_1$ is a group represented by A-B and at least one $R_1$ is a hydrocarbon group among a plurality of $R_1$, A is a divalent organic group bonded to a silicon atom in the formula (1), and B has three or more and six or less conjugated aromatic six-membered rings,

when an atom bonded to the aromatic six-membered ring contained in B is defined as an α-position atom, an atom

bonded to the α-position atom is defined as a β-position atom, and an atom bonded to the β-position atom other than the α-position atom is defined as a γ-position atom among atoms constituting A, any of the α-position atom, the β-position atom, and the γ-position atom is a heteroatom, and
the letter of n is an integer of 1 or more.

When the organopolysiloxane (B) of the present invention is used in combination with the filler (A) and the organopolysiloxane (C) mentioned later, the flexibility of the silicone resin composition is enhanced. The principle thereof is uncertain, but can be inferred as follows.

The organopolysiloxane (B) has three or more and six or less conjugated aromatic six-membered rings and includes a moiety of a large conjugated system (conjugated aromatic moiety) in the molecular structure. Thus, the organopolysiloxane (B) has a high adsorptivity and a high affinity with respect to the filler (A) having a six-membered ring atomic structure as a structural unit due to the π-π interaction. In addition, the organopolysiloxane (B) also has a high affinity with respect to the organopolysiloxane (C) having the same basic backbone.

Meanwhile, in the organopolysiloxane (B), any one of the α-position atom bonded to an aromatic six-membered ring, the β-position atom, and the γ-position atom is a heteroatom. When only a C-C bond is present in the vicinity of the aromatic ring as in the structures of the treatment agents described in Patent Literatures 1 and 2 mentioned above, the rotational degree of freedom of bonds is low, the conformation in the vicinity of the aromatic ring is immobilized, the self-aggregation force is increased, so that it is difficult to improve the flexibility of the composition. However, it is considered that, in the structure of the organopolysiloxane (B) according to the present embodiment, the presence of a heteroatom in the vicinity of the aromatic ring increases the rotational degree of freedom, and it enables various conformations to be taken in the vicinity of the aromatic ring, and reduces the self-aggregation force. Thus, the self-aggregation force of the organopolysiloxane (B) itself is reduced while the organopolysiloxane (B) has an enhanced affinity with respect to the filler (A) and the organopolysiloxane (C), and as a result, the flexibility of the silicone resin composition is improved.

<Organopolysiloxane represented by formula (1)>

Each $R_1$ in the formula (1) is independently a group represented by A-B, a monovalent hydrocarbon group having 1 to 4 carbon atoms, or a hydrogen atom.

At least one $R_1$ among a plurality of $R_1$ is a group represented by A-B. A is a divalent organic group and is bonded to a silicon atom in the formula (1). At least one $R_1$ among a plurality of $R_1$ is a monovalent hydrocarbon group having 1 to 4 carbon atoms, and $R_1$ other than the group represented by A-B among a plurality of $R_1$ is preferably a monovalent hydrocarbon group having 1 to 4 carbon atoms.

Among atoms constituting A, any of the α-position atom, the β-position atom, and the γ-position atom is a heteroatom. Consequently, the self-aggregation of the organopolysiloxane (B) is reduced and the flexibility of the silicone resin composition is increased. In addition, $|\delta P_{R-D}|$ mentioned later is easily reduced. From the viewpoint of enhancing the flexibility of the silicone resin composition, the α-position atom or the β-position atom is preferably a heteroatom, and the α-position atom is more preferably a heteroatom.

Here, the α-position atom refers to an atom bonded to an aromatic six-membered ring contained in B (that is, an aromatic six-membered ring of three or more and six or less conjugated aromatic six-membered rings contained in B) among atoms constituting A. The β-position atom refers to an atom bonded to the α-position atom among atoms constituting A. The γ-position atom refers to an atom bonded to the β-position atom and is an atom other than the α-position atom.

A may have a heteroatom in the moiety other than the α-position atom, the β-position atom, and the γ-position atom.

The heteroatom is not particularly limited, and examples thereof include an oxygen atom, a nitrogen atom, a sulfur atom, and a boron atom, and above all, from the viewpoint of effectively enhancing the flexibility of the silicone resin composition, an oxygen atom is preferable.

A is preferably a divalent organic group having 11 or less carbon atoms, and more preferably a divalent organic group having 10 or less carbon atoms. Thus, the organopolysiloxane (B) in which the number of carbon atoms of A is a certain number or less is preferable because it easily enhances the dispersing ability of the filler (A) in the resin composition. The lower limit of the number of carbon atoms in A is not particularly limited, and is, for example, 2, preferably 3, and more preferably 4. That is, the lower limit of the number of carbon atoms of A is not particularly limited, and A is preferably a divalent organic group having 4 or more carbon atoms.

Since A has a heteroatom as described above, A has a structural unit having a heteroatom. Examples of the structural unit include an ether, an ester, an amide, a urethane, a thioether, and a thioester, and above all, an ether or an ester is preferable, an ether is more preferable, and a cyclic ether is particularly preferable, from the viewpoint of enhancing the dispersing ability to the filler and enhancing the flexibility. The cyclic ether refers to an ether having a structure in which carbon in a cyclic hydrocarbon is substituted with oxygen.

From the viewpoint of enhancing the dispersing ability to the filler and improving the flexibility, A preferably has a backbone represented by the following formula (5-1) or formula (5-2).

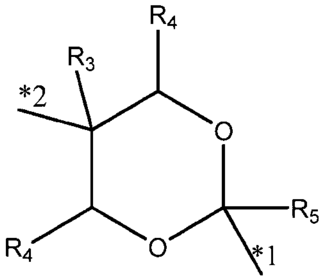

Formula (5-1)

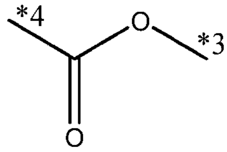

Formula (5-2)

In the formula (5-1), each of the marks of *1 and *2 is a bond, and $R_4$ is a hydrogen atom or a hydrocarbon group having 1 to 4 carbon atoms, and preferably a hydrogen atom. Two $R_4$ may be the same or different from each other. $R_3$ is a hydrogen atom or a hydrocarbon group having 1 to 4 carbon atoms, preferably a hydrocarbon group having 1 to 4 carbon atoms, more preferably a hydrocarbon group having 1 to 3 carbon atoms, and still more preferably an ethyl group. $R_5$ is a hydrogen atom or a hydrocarbon group having 1 to 4 carbon atoms, and preferably a hydrogen atom. Each oxygen atom in the formula (5-1) is the β-position atom or the γ-position atom described above, and preferably the β-position atom.

In the formula (5-2), each of the marks of *3 and *4 is a bond. The oxygen atom having a bond of *3 is the α-position atom, the β-position atom, or the γ-position atom described above.

Among those described above, A preferably has a backbone represented by the formula (5-1).

Further, from the viewpoint of enhancing the dispersing ability to the filler and improving the fluidity, A is preferably any structure represented by the following formula (6) to formula (10).

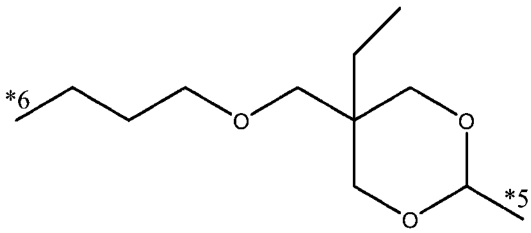

Formula (6)

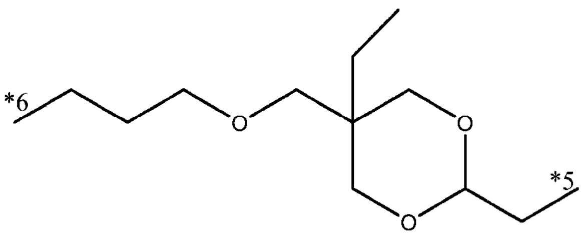

Formula (7)

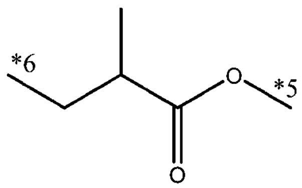

Formula (8)

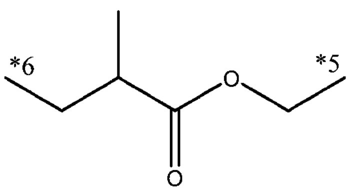

Formula (9)

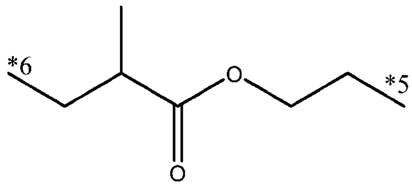 Formula (10)

The mark of *5 in the formula (6) to the formula (10) is a bond bonded to an aromatic six-membered ring contained in B, and the mark of *6 is a bond bonded to a silicon atom in the formula (1).

B in the formula (1) has three or more and six or less conjugated aromatic six-membered rings. Conjugation means that unsaturated bonds and single bonds are alternately arranged in a molecular structure, and stabilization due to the interaction of p-orbitals, the delocalization of electrons (electrons are present over the entire conjugated system), and the like are caused.

When the number of aromatic six-membered rings is 7 or more, the self-aggregation of the organopolysiloxane (B) increased, and when the number of aromatic six-membered rings is 2 or less, the adsorptivity with the filler is reduced and the dispersing ability of the filler deteriorates.

Further, when the number of aromatic six-membered rings is 6 or less, $|\delta P_{R-D}|$ mentioned later is easily reduced to a predetermined value or less, and when the number of aromatic six-membered rings is 3 or more, the compatibility with the filler (A) is enhanced and the dispersing ability of the filler (A) is easily made favorable.

From the viewpoint of preventing the self-aggregation from being increased and enhancing the flexibility of the resin composition while enhancing the adsorptivity or compatibility with the filler, the number of aromatic six-membered rings in B is preferably 4 or more and 5 or less.

Three or more and six or less conjugated aromatic six-membered rings may be a condensed ring compound constituted by three or more and six or less aromatic six-membered rings or a non-condensed ring compound constituted by three or more and six or less aromatic six-membered rings, and is preferably a condensed ring compound. Thus, when B contains a condensed ring compound or B is a condensed ring compound, the adsorptivity or compatibility to the filler is further enhanced, which is preferable from the viewpoint of enhancing the dispersing ability.

Examples of the condensed ring compound include an anthracene substituent, a phenanthrene substituent, a triphenylene substituent, a pyrene substituent, a tetracene substituent, a picene substituent, a perylene substituent, a pentaphene substituent, a pentacene substituent, or a hexaphene substituent, and above all, a pyrene substituent or a perylene substituent is preferable. Here, the substituent means that a substituent group may be contained therein, and for example, the anthracene substituent means including both anthracene and anthracene having a substituent group, and the same applies to other substituents.

When the condensed ring compound has a substituent group, at least one or more hydrogen atoms among hydrogen atoms constituting the condensed ring compound are substituted with a substituent group. Examples of the substituent group include an organic group having 1 to 10 carbon atoms.

From the viewpoint of enhancing the fluidity of the organopolysiloxane of the present invention, the condensed ring compound preferably has no substituent group. Thus, B is particularly preferably pyrene or perylene.

In the condensed ring compound, any of the carbon atoms constituting the condensed ring may be bonded to the above A.

For example, the non-condensed ring compound has a structure in which a plurality of aromatic rings is linked via a single bond, and examples thereof include a terphenyl substituent. Also, in the non-condensed ring compound, a carbon atom constituting the aromatic ring may be bonded to the above A.

That is, "B" in A-B preferably has a group in which three or more and six or less aromatic six-membered rings condensed with each other or linked via a single bond or the like, and conjugated with each other are arranged, and typically has a group in which three or more and six or less conjugated aromatic six-membered rings are arranged.

In the present invention, those described above can be utilized as B without particular limitation, and suitable structures of B are shown below.

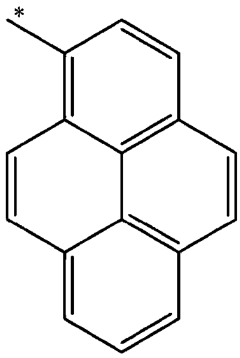

Formula (11)

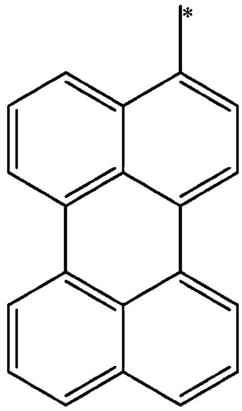

Formula (12)

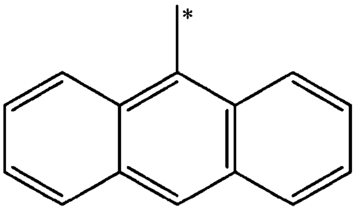

Formula (13)

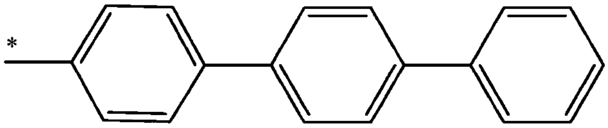

Formula (14)

In the above formula (11) to formula (14), the mark of * is a bond bonded to A.

Among the above formula (11) to formula (14), any of the compounds represented by the formula (11) to formula (13), which are condensed ring compounds, is preferable, pyrene of the formula (11) or perylene of the formula (12) is more preferable, and perylene of the formula (12) is still more preferable.

In the formula (1), at least one $R_1$ is the above group represented by A-B, and each remaining $R_1$ is a hydrocarbon group having 1 to 4 carbon atoms or a hydrogen atom.

In the formula (1), among a plurality of $R_1$, the number of groups represented by A-B is preferably 1 or more and 5 or less, more preferably 1 or 2, and each remaining $R_1$ is preferably a monovalent hydrocarbon group having 1 to 4 carbon atoms. When a plurality of groups represented by A-B is present, the plurality of groups represented by A-B may be the same or different from one another.

Examples of the monovalent hydrocarbon group having 1 to 4 carbon atoms include alkyl groups such as a methyl group, an ethyl group, a propyl group, and a butyl group, and above all, a methyl group is preferable. The alkyl group is preferably linear, but may be branched. When a plurality of monovalent hydrocarbon groups having 1 to 4 carbon atoms is present, the plurality of monovalent hydrocarbon groups having 1 to 4 carbon atoms may be the same or different from one another.

In the formula (1), the letter of n means the number of repetitions, and the letter of n is an integer of 1 or more. The letter of n is not particularly limited, as long as it is an integer of 1 or more, and from the viewpoint of making the fluidity favorable, the letter of n is preferably 500 or less, more preferably 300 or less, and still more preferably 250 or less, and preferably 20 or more, more preferably 100 or more, and still more preferably 200 or more.

The organopolysiloxane having a structure represented by the formula (1) may have a group represented by A-B at one end, at both ends, at a side chain, at one end and a side chain, or at both ends and a side chain.

<Organopolysiloxane represented by formula (2)>

The organopolysiloxane according to one embodiment of the present invention has a structure represented by the following formula (2). The organopolysiloxane has a group represented by A-B at one end:

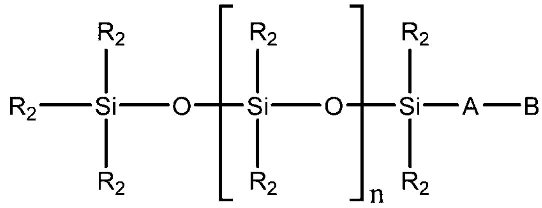 Formula (2)

wherein $R_2$ is a monovalent hydrocarbon group having 1 to 4 carbon atoms or a hydrogen atom, A, B, and the letter of n have the same meanings as those in the formula (1), and at least one $R_2$ among a plurality of $R_2$ is a hydrocarbon group.

In the formula (2), $R_2$ is preferably a monovalent hydrocarbon group having 1 to 4 carbon atoms. Examples thereof include alkyl groups such as a methyl group, an ethyl group, a propyl group, and a butyl group, and above all, a methyl group is preferable. The alkyl group is preferably linear, but may be branched. A plurality of $R_2$ may be the same or different from one another. In the formula (2), A, B, and the letter of n have the same meanings as those in the formula (1) and as described above.

The organopolysiloxane represented by the formula (2) has a group represented by A-B at one end and easily enhances the dispersing ability of the filler, which is preferable.

<Organopolysiloxane represented by formula (3)>

The organopolysiloxane according to one embodiment of the present invention has a structure represented by the following formula (3). The organopolysiloxane has a group represented by A-B at both ends:

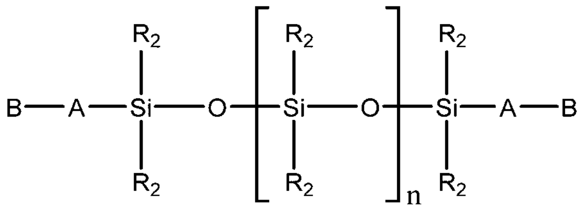 Formula (3)

wherein $R_2$ is a monovalent hydrocarbon group having 1 to 4 carbon atoms or a hydrogen atom, A, B, and the letter of n have the same meanings as those in the formula (1), and at least one $R_2$ among a plurality of $R_2$ is a hydrocarbon group.

$R_2$ in the formula (3) has the same meaning as $R_2$ in the formula (2), and A, B, and the letter of n have the same meanings as those in the formula (1).

<Organopolysiloxane represented by formula (4)>

The organopolysiloxane according to one embodiment of the present invention has a structure represented by the following formula (4). The organopolysiloxane has a group represented by A-B at a side chain:

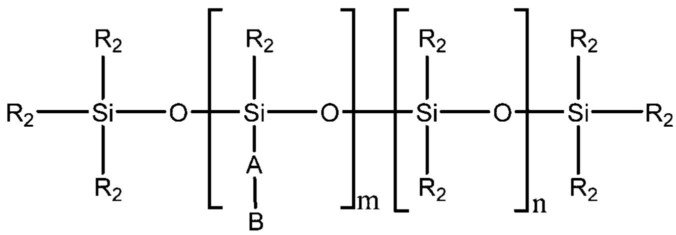 Formula (4)

wherein $R_2$ is a monovalent hydrocarbon group having 1 to 4 carbon atoms or a hydrogen atom, the letter of m is an integer of 1 or more and 10 or less, A, B, and the letter of n have the same meanings as those in the formula (1), and at least one $R_2$ among a plurality of $R_2$ is a hydrocarbon group.

$R_2$ in the formula (4) has the same meaning as $R_2$ in the formula (2), and A, B, and n have the same meanings as those in the formula (1).

In the formula (4), the letter of m is an integer of 1 or more and 10 or less, preferably an integer of 1 or more and 5 or less, and more preferably 1 or 2. The letter of m within such a range is preferable because the fluidity can be enhanced while enhancing the adsorptivity or compatibility with the filler.

The organopolysiloxane represented by the formula (4) may be a random polymer or a block polymer. More

specifically, the unit indicated in the parenthesis with the letter of m and the unit indicated in the parenthesis with the letter of n may be present in the molecule like a block polymer or a random polymer.

Among the above, the organopolysiloxane (B) represented by the formula (2) or the formula (3) is preferable. In the above polyorganosiloxane having a structure represented by the above formula (2) or the above formula (3), the main chain of the above polyorganosiloxane is not bound by the filler and the conformational degree of freedom increases, so that the excluded volume increases. As a result, the dispersing ability of the filler is further easily enhanced.

The organopolysiloxane (B) may be used singly, or two or more may be used in combination.

In the formula (1), each remaining $R_1$ other than the group represented by A-B is a hydrocarbon group having 1 to 4 carbon atoms or a hydrogen atom, all of them are preferably hydrocarbon groups having 1 to 4 carbon atoms, and all of them are more preferably alkyl groups.

Also, in the formulas (2) to (4), $R_2$ is a hydrocarbon group having 1 to 4 carbon atoms or a hydrogen atom, all of them are preferably hydrocarbon groups having 1 to 4 carbon atoms, and all of them are more preferably alkyl groups.

However, some remaining $R_1$ other than the group represented by A-B may be alkenyl groups or hydrogen atoms. Also, some $R_2$ may be alkenyl groups or hydrogen atoms. Examples of the alkenyl group include a vinyl group, an allyl group, a propenyl group, an isopropenyl group, and a butenyl group, and a vinyl group is preferable.

When $R_1$ or $R_2$ is a hydrogen atom, $R_1$ or $R_2$ constitutes a hydrosilyl group. When the organopolysiloxane (B) has an alkenyl group or a hydrosilyl group, the organopolysiloxane (B) can be reacted with an addition reaction silicone and makes oil bleeding from a heat conductive formed product that is a cured product of the resin composition be hardly caused. In addition, compression set can be reduced and further, tensile elongation at break and tensile breaking strength can be increased.

When some remaining $R_1$ are alkenyl groups or hydrogen atoms, the others of remaining $R_1$ are preferably alkyl groups.

Also, when some $R_2$ are alkenyl groups or hydrogen atoms, the others of $R_2$ are preferably alkyl groups.

When some $R_1$ or some $R_2$ are hydrogen atoms, the number of hydrogen atoms in each of the formulas (1) to (4) may be 1 or 2 or more, preferably 1 to 10, more preferably 1 to 5, and most preferably 2.

Also, when some $R_1$ or some $R_2$ are alkenyl groups, the number of alkenyl groups in each of the formulas (1) to (4) may be 1 or 2 or more, preferably 1 to 10, more preferably 1 to 5, and most preferably 2.

For example, when the polyorganosiloxane (B) has a group represented by A-B at one end, it is preferable to have an alkenyl group or a hydrosilyl group at another end.

The polyorganosiloxane (B) may have a structure having A-B at one end as represented by the above formula (2), while also having A-B at a side chain as represented by the above formula (4). The polyorganosiloxane (B) may have a structure having A-B at both ends as represented by the above formula (3), while also having A-B at a side chain as represented by the above formula (4). However, from the viewpoint of further easily enhancing the dispersing ability of the filler, the polyorganosiloxane (B) most preferably has a structure having A-B only at one end as represented by the above formula (2).

The organopolysiloxane (B) preferably has a number-average molecular weight of 1000 or more and 16000 or less. When the number-average molecular weight falls within the above range, the flexibility is easily enhanced, while making the coatability and workability of the silicone resin composition favorable. The number-average molecular weight is more preferably 2000 or more and 15800 or less, and still more preferably 3000 or more and 15500 or less. From the viewpoint of reducing the polarity value of a dispersant (B), and for example, also reducing the difference in polarity ($|\delta P_{R-D}|$) mentioned later, the number-average molecular weight is suitably a certain value or more, and specifically, still more preferably 3000 or more, and even more preferably 5000 or more as described above.

The number-average molecular weight is a value measured by gel permeation chromatography (GPC) in terms of polystyrene.

In the present invention, the value X calculated by the following equation is, for example, $1 \times 10^{-7}$ or more and $1 \times 10^{-3}$ or less, preferably $1 \times 10^{-6}$ or more and $1 \times 10^{-4}$ or less, and more preferably $2 \times 10^{-6}$ or more and $9 \times 10^{-5}$ or less.

X = {(the number of conjugated aromatic rings per molecule of component (B)) ÷ (number-average molecular weight of component (B)) × (content of component (B) [parts by mass])} ÷ {(specific surface area of component (A) [$cm^2/g$]) × (content of component (A) [parts by mass])}

The number of conjugated aromatic rings refers to the total ring number of conjugated aromatic rings per molecule of the organopolysiloxane (B). For example, when one pyrene is present in a molecule, the number of conjugated aromatic rings is 4, and when two terphenyls are present in a molecule, the number of conjugated aromatic rings is 6. When two or more components each having a different number of conjugated aromatic rings are contained in the organopolysiloxane (B), the number of conjugated aromatic rings is a weighted average value weighted-averaged with the mass proportion of each component.

In the above equation, the value represented by (the number of conjugated aromatic rings per molecule of component (B)) ÷ (number-average molecular weight of component (B)) × (content of component (B) [parts by mass]) is an index indicating how many conjugated aromatic ring moieties are contained in the organopolysiloxane (B). Meanwhile, {(specific surface area of component (A) [$cm^2/g$]) × (content of component (A) [parts by mass])} is an index indicating the total surface area of the filler (A) to which the component (B) is to be adsorbed, and it is said that the above value X is an index indicating the proportion of the number of conjugated aromatic ring moieties to the total surface area of the filler (A).

Then, when the X value is a predetermined value or more, the flexibility of the silicone resin composition is easily enhanced, while the organopolysiloxane (B) is suitably adsorbed to the filler (A). When the value X is a predetermined value or less, an effect commensurate with the content of the organopolysiloxane (B) is easily exerted.

The content of the organopolysiloxane (B) may be adjusted so that the X value described above falls within the above range, and is, for example, 0.5 parts by mass or more and 2000 parts by mass, preferably 0.5 parts by mass or more and 50 parts by mass or less, more preferably 2 parts by mass or more and 40 parts by mass or more, and still more preferably 4 parts by mass or more and 30 parts by mass or less per 100 parts by mass of the filler (A).

<Method for producing organopolysiloxane (B)>

The method for producing the organopolysiloxane (B) is not particularly limited, and the organopolysiloxane (B) can be obtained by reacting an generally available organopolysiloxane having a functional group with a compound having three or more and six or less conjugated aromatic six-membered rings and having a functional group capable of reacting with the functional group contained in the organopolysiloxane. As an example, the organopolysiloxane (B) can be produced by utilizing an acetalization reaction of aldehyde with diol, a hydrosilylation reaction of a hydrosilyl group with a carbon-carbon unsaturated bond, or the like.

For example, the organopolysiloxane (B) can be produced by a reaction of an organopolysiloxane having a diol structure with a compound having an aldehyde group and three or more and six or less conjugated aromatic six-membered rings. As another method, the organopolysiloxane (B) can be produced by a reaction of an organopolysiloxane having a hydrosilyl group at an end and/or a side chain with a compound that has a group having a carbon-carbon unsaturated bond such as an acryloyl group or a methacryloyl group and three or more and six or less conjugated aromatic six-membered rings.

The silicone resin composition may appropriately contain a by-product produced in the production process of the organopolysiloxane (B). For example, as described above, the organopolysiloxane (B) uses an organopolysiloxane having a functional group as the raw material in its production process in some cases, and examples of the by-product thereof include a condensate of an organopolysiloxane produced through a condensation reaction of the functional groups of the organopolysiloxane having a functional group such as a hydroxyl group.

Examples thereof also include a by-product obtained by reacting a side reaction product obtained through the dimerization or oxidation of a compound having three or more and six or less conjugated aromatic six-membered rings in the process of synthesizing an organopolysiloxane having a functional group with a compound having three or more and six or less conjugated aromatic six-membered rings, further with an organopolysiloxane having a functional group or a side reaction product thereof. Examples thereof also include a by-product obtained by reacting a side reaction product obtained by the side reaction of an organopolysiloxane having a functional group with a compound having three or more and six or less conjugated aromatic six-membered rings. As described above, in the organopolysiloxane (B), it is preferable that "B" in A-B typically have a group in which three or more and six or less aromatic six-membered rings conjugated with each other are arranged and "A" be divalent. Instead, the above by-product may have two or more groups in which three or more and six or less aromatic six-membered rings conjugated with each other are arranged and a trivalent group as A. For example, in the case of Synthetic Example A1 mentioned later, a compound having the following structure may be contained as a by-product. The by-product is preferably contained in a range not inhibiting the effect of the present invention, and is, for example, preferably contained in the silicone resin composition in an amount of, for example, about 30 parts by mass or less, preferably 20 parts by mass or less, and still more preferably 10 parts by mass or less per 100 parts by mass of the organopolysiloxane (B).

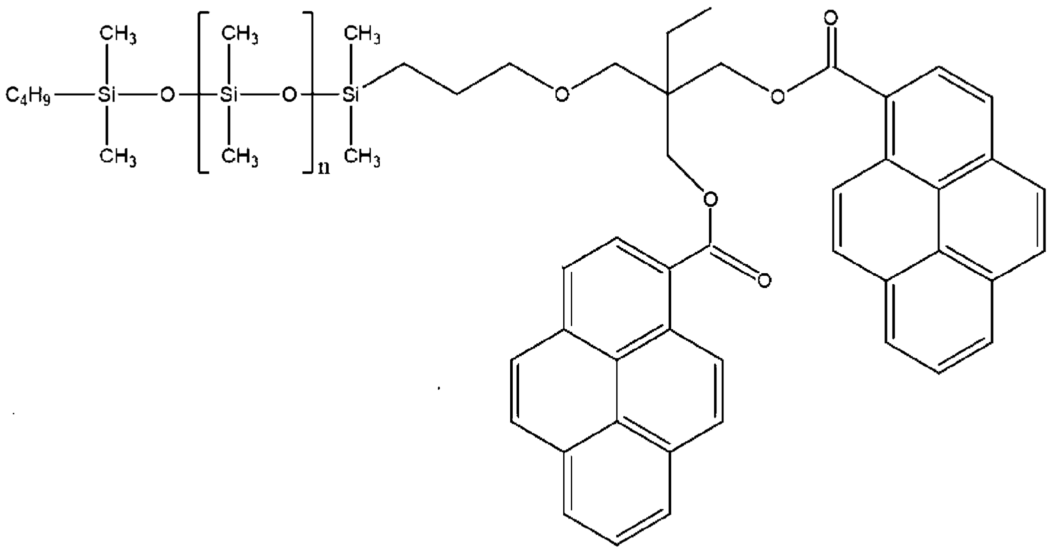

[Organopolysiloxane (C)]

The silicone resin composition of the present invention contains an organopolysiloxane (C). The organopolysiloxane (C) is an organopolysiloxane having a structure different from the organopolysiloxane (B) described above. The organopolysiloxane (C) is preferably a matrix resin in the silicone resin composition, and the filler (A) and the arbitrarily formulated other filler (D), which will be mentioned later, are preferably dispersed in the organopolysiloxane (C) and held in the organopolysiloxane (C).

The organopolysiloxane resin (C) may be a compound other than the compound shown in the formula (1), and is typically a compound having no conjugated aromatic moiety having three or more and six or less conjugated aromatic six-membered rings. The conjugated aromatic moiety having three or more and six or less conjugated aromatic six-membered rings as used herein has the same meaning as "B" described in the formula (1).

Examples of the organopolysiloxane (C) include a curable silicone resin. The curable silicone resin may be any of a condensation-curable silicone resin and an addition reaction-curable silicone resin, and an addition reaction-curable silicone resin is preferable.

The organopolysiloxane (C) may be branched, may have a linear structure, and specific examples thereof include an organopolysiloxane having an addition reactive group. The addition reactive group means a functional group that reacts by an addition reaction, and representative examples thereof include an alkenyl group, a methacryloyl group, an acryloyl group, and a hydrosilyl group. The organopolysiloxane having an addition reactive group is preferably used as an addition reaction-curable silicone resin.

Preferred examples of the organopolysiloxane having an addition reactive group include an organopolysiloxane having an alkenyl group and an organopolysiloxane having a hydrosilyl group.

The organopolysiloxane having an alkenyl group is an addition reaction-curable silicone resin that is cured by being combined with an organopolysiloxane having a hydrosilyl group. The organopolysiloxane having an alkenyl group preferably has one or two or more alkenyl groups, and preferably two or more alkenyl groups in the molecule.

In the organopolysiloxane, the alkenyl group may be contained at any of the end or the middle of the molecular chain of the polysiloxane structure, or at both the end and the middle, and is preferably contained at at least an end, and still more preferably contained at both ends of the molecular chain composed of the polysiloxane structure.

Examples of the alkenyl group include, but is not particularly limited to, those having 2 to 8 carbon atoms such as a vinyl group, an allyl group, a butenyl group, a pentenyl group, a hexenyl group, a heptenyl group, and an octenyl group, and among them, a vinyl group is preferable from the viewpoint of the ease of synthesis, the reactivity, and the like. The alkenyl group is preferably an alkenyl group directly bonded to a silicon atom.

In the organopolysiloxane having an alkenyl group, examples of the remaining groups each bonded to a silicon atom other than the alkenyl group include alkyl groups having about 1 to 18 carbon atoms such as a methyl group, an ethyl group, a propyl group, a butyl group, a hexyl group, and a dodecyl group; aryl groups having about 6 to 12 carbon atoms such as a phenyl group; and aralkyl groups having about 7 to 18 carbon atoms such as a 2-phenylethyl group and a 2-phenylpropyl group, and further, specific examples thereof include substituted hydrocarbon groups such as a chloromethyl group and a 3,3,3-trifluoropropyl group.

Among them, a methyl group is preferable from the viewpoint of the ease of synthesis and the like. Among the remaining groups each bonded to a silicon atom, 80 mol% or more thereof are preferably methyl groups, 90 mol% or more

are more preferably methyl groups, and 100 mol% are still more preferably methyl groups. The organopolysiloxane having an alkenyl group typically has no hydrogen atom as the remaining group bonded to a silicon atom, that is, the component (A) preferably contains no hydrosilyl group.

Specific examples of the organopolysiloxane having an alkenyl group include organopolysiloxanes having vinyl groups at both ends such as polydimethylsiloxane having vinyl groups at both ends, polyphenylmethylsiloxane having vinyl groups at both ends, a dimethylsiloxane-diphenylsiloxane copolymer having vinyl groups at both ends, a dimethylsiloxane-phenylmethylsiloxane copolymer having vinyl groups at both ends, and a dimethylsiloxane-diethylsiloxane copolymer having vinyl groups at both ends.

The organopolysiloxane having a hydrosilyl group is an addition reaction-curable silicone resin that is cured by being combined with an organopolysiloxane having an alkenyl group described above. The organopolysiloxane having a hydrosilyl group preferably has one or two or more hydrosilyl groups per molecule. The hydrosilyl group may be contained at any of the end of the molecular chain or the middle of the molecular chain of the polysiloxane structure, and is preferably contained at an end, and more preferably contained at both ends of the molecular chain of the polysiloxane structure.

In the organopolysiloxane having a hydrosilyl group, specific examples of the remaining groups each bonded to a silicon atom other than the hydrosilyl group are as described in the organopolysiloxane having an alkenyl group, the description thereof is omitted. The remaining groups are preferably methyl groups, and the preferred proportion thereof is as described in the organopolysiloxane having an alkenyl group. The organopolysiloxane having a hydrosilyl group typically has no alkenyl group.

Examples of the organopolysiloxane having a hydrosilyl group include a methylhydrosiloxane-dimethylsiloxane copolymer, polymethylhydrosiloxane, polyethylhydrosiloxane, and a methylhydrosiloxane-phenylmethylsiloxane copolymer. These may contain or may not contain a hydrosilyl group at an end.

The organopolysiloxane may be an organopolysiloxane having no addition reactive group, and examples thereof include silicone oils. Examples of the silicone oil include straight silicone oils such as phenylmethylsilicone oils such as dimethylsilicone oil (polydimethylsiloxane), polyphenylmethylsiloxane, a dimethylsiloxane-diphenylsiloxane copolymer, and dimethylsiloxane-phenylmethylsiloxane, and non-reactive modified silicone oils in which a non-reactive organic group is introduced into the main chain having a polysiloxane structure, a side chain bonded to the main chain, or an end of the main chain. The non-reactive organic group is an organic group having no addition reactive group. Examples of the non-reactive modified silicone oil include polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, and phenyl-modified silicone oil. Among the above, silicone oil is preferably straight silicone oil, and among straight silicone oils, dimethylsilicone oil is more preferable.

The organopolysiloxane may be other than the above, and may be an organopolysiloxane having an alkoxy group, an organopolysiloxane having a silanol group, and the like.

As the organopolysiloxane (C), an organopolysiloxane of those described above may be used singly, or two or more thereof may be used in combination.

The organopolysiloxane (C) preferably has a number-average molecular weight of 1000 or more and 50000 or less. When the number-average molecular weight falls within the above range, the silicone resin composition can maintain a certain shape after coating or after working, while making the coatability and workability of the silicone resin composition favorable, so that a heat radiation material can be easily formed from the silicone resin composition. Also, it becomes easy to suitably disperse the filler (A), formulate a large amount of the filler (A), and enhance the thermal conductivity, while ensuring the flexibility of the silicone resin composition. The number-average molecular weight is more preferably 3000 or more and 40000 or less, and still more preferably 5000 or more and 30000 or less.

The number-average molecular weight is a value measured by gel permeation chromatography (GPC) in terms of polystyrene.

The organopolysiloxane (C) is preferably liquid at an ambient temperature (25°C) and an ordinary pressure (1 atmosphere). When the organopolysiloxane (C) is a liquid, the coatability and workability of the silicone resin composition are easily made favorable. In addition, it is easy to suitably disperse the filler (A) and formulate a large amount of the filler (A), while ensuring the flexibility of the silicone resin composition.

The silicone resin composition may be a curable or non-curable resin composition. The curable resin composition may be one-part curable or two-part curable. In the case of the one-part curable resin composition, a silicone resin serving as a base resin and a silicone resin serving as a curing agent may be contained as the organopolysiloxane (C), and more specifically, an organopolysiloxane having an alkenyl group and an organopolysiloxane having a hydrosilyl group are preferably contained.

In the case of the two-part curable resin composition, the silicone resin composition may constitute any one part of two parts. Therefore, the silicone resin composition may contain a silicone resin serving as a base resin or a silicone resin serving as a curing agent. More specifically, the silicone resin composition preferably contains an organopolysiloxane having an alkenyl group or an organopolysiloxane having a hydrosilyl group.

However, also in the case of the two-part curable resin composition, the silicone resin may contain an

organopolysiloxane having a hydrosilyl group or an organopolysiloxane having an alkenyl group in addition to the organopolysiloxane having an alkenyl group or the organopolysiloxane having a hydrosilyl group, unless curing proceeds.

In the case of the two-part curable resin composition, a mixture of the first part and the second part may form the silicone resin composition of the present invention.

In the case of the two-part curable resin composition, for example, both the first part and the second part are formed of a silicone resin composition containing the filler (A), the organopolysiloxane (B), and the organopolysiloxane (C). Then, it is preferable that the first part contain an organopolysiloxane having an alkenyl group and the second part contain an organopolysiloxane having a hydrosilyl group.

The curable silicone resin composition may contain the non-reactive organopolysiloxane described above as the organopolysiloxane (C), and may contain, for example, an organopolysiloxane having no addition reactive group in addition to the organopolysiloxane having an alkenyl group or the organopolysiloxane having a hydrosilyl group described above.

The silicone resin composition may be a non-curable silicone resin composition, and in such a case, for example, a silicone oil may be used as the organopolysiloxane (C).

Further, some organopolysiloxanes (C) may be by-products produced in the process of producing the organopolysiloxane (C) described above. Therefore, when the organopolysiloxane (C) includes a by-product produced in the process of producing the organopolysiloxane (C), a component other than the by-product is preferably further included.

The content of the organopolysiloxane (C) in the silicone resin composition is, for example, 0.5% by mass or more and 90% by mass or less, preferably 0.8% by mass or more and 80% by mass or less, more preferably 2% by mass or more and 75% by mass or less, and still more preferably 4% by mass or more and 69% by mass or less, based on the total amount of the silicone resin composition. By setting the content of the organopolysiloxane (C) within the above range, the organopolysiloxane (C) can suitably hold the filler (A) and the other filler (D) mentioned later. Then, the thermal conductivity is easily enhanced, while maintaining the flexibility of the silicone resin composition.

[Other filler]

The silicone resin composition may contain a filler (D) other than the filler (A) described above, in addition to the filler (A). By containing the other filler in addition to the filler (A), it becomes easy to further enhance the thermal conductivity of the silicone resin composition.

The filler (D) may be in any shape, and may be particulate or fibrous. The shape of the particulate filler (D) is not particularly limited, and may be in any shape such as scaly, spherical, a polygonal shape, and an indefinite shape, or may be an agglomerate in which a plurality of primary particles is aggregated.

The filler (D) is preferably a metal filler or a metal oxide filler. Examples of the metal constituting the metal filler include pure metals such as copper, gold, nickel, tin, iron, and aluminum, or alloys containing them. Examples of the metal oxide constituting the metal oxide filler include aluminum oxide, magnesium oxide, zinc oxide, titanium oxide, cerium oxide, zirconium oxide, and composite oxides containing these oxides.

In the silicone resin composition, the filler (D) may be used singly or two or more may be used in combination.

The content of the filler (D) is not particularly limited, and is preferably 1% by mass or more and 90% by mass or less, more preferably 3% by mass or more and 85% by mass or less, and still more preferably 5% by mass or more and 80% by mass or less, based on the total amount of the silicone resin composition.

[Other component]

The silicone resin composition may contain a component other than the filler (A), organopolysiloxane (B), organopolysiloxane (C), and filler (D) described above in a range not inhibiting the effect of the present invention, as necessary.

For example, when the organopolysiloxane (C) is a curable silicone resin, a curing catalyst may be usually contained in the silicone resin composition. When the organopolysiloxane (C) is an addition reaction silicone resin, examples of the curing catalyst include a platinum catalyst, a palladium catalyst, and a rhodium catalyst. The curing catalyst is a catalyst for curing the base resin and the curing agent. The amount of the curing catalyst formulated is usually 0.1 to 200 ppm, and preferably 0.5 to 100 ppm based on the mass of the organopolysiloxane (C).

Other than the curing catalyst, an additive such as an alkoxysilane compound, an antioxidant, a thermal stabilizer, a colorant, a fire retardant, or an antistatic agent may be formulated. The other component may be used singly or two or more may be used in combination.

<<Second embodiment>>

Hereinafter, the resin composition according to the second embodiment of the present invention will be described

in detail.

The resin composition according to the second embodiment of the present invention contains a filler (A) having $\pi$ electrons and having a six-membered ring atomic structure as a structural unit, a dispersant (B) that is an organopolysiloxane, and an organopolysiloxane resin (C) having a structure different from the dispersant (B). Then, a solubility index Ra and a polarity parameter term $\delta P$ between two components calculated by Hansen solubility parameters (HSP) satisfy the following requirements (1) and (2):

requirement (1):
$Ra_{(D/R)}$ as a compatibility index of the dispersant (B) with the organopolysiloxane (C) is 0.01 or more and 10.0 or less, and $Ra_{(D/F)}$ as a compatibility index of the filler (A) with the dispersant (B) is 8.6 or more and 30.0 or less; and
requirement (2):
a difference in polar term $\delta P$ between the dispersant (B) and the organopolysiloxane (C) ($|\delta P_{R-D}|$) is 4.2 or less.

The solubility parameter of Hildebrand generally known as an SP value ($\delta$) assumes that the force acting between a solvent and a solute is only an intermolecular force. In contrast, the Hansen solubility parameter (HSP) is represented by three components of a dispersion term $\delta D$, a polar term $\delta P$, and a hydrogen bond term $\delta H$ and can be plotted on a three-dimensional space having each of them as an axis. The dispersion term $\delta D$ indicates the effect of a dispersion force, the polar term $\delta P$ indicates the effect of an interdipolar force, and the hydrogen bond term $\delta H$ indicates the effect of a hydrogen bonding force.

The Hildebrand SP value ($\delta$) and the Hansen solubility parameter (HSP) have a relationship of the following equation (I), and the SP value corresponds to the length of vectors having $\delta D$, $\delta P$, and $\delta H$ as three components (totHSP) of HSP. In the following equation (I), $\delta D$, $\delta P$, and $\delta H$ respectively indicate the dispersion term, the polar term, and the hydrogen bond term in the Hansen solubility parameter, and each unit is $(MPa)^{1/2}$.

$$\delta^2 = (\text{totHSP})^2 = \delta D^2 + \delta P^2 + \delta H^2 \qquad \text{Equation (I)}$$

Therefore, it is said that HSP is a further excellent method in terms of completely including the information of the Hildebrand SP value and capable of evaluating the solubility including the direction of vectors.

The definition and calculation of the Hansen solubility parameter should be carried out by, for example, those described in Hansen Solubility Parameters: A Users Handbook (CRC press, 2007) written by Charles M. Hansen. HSP can be conveniently calculated by using computer software, Hansen Solubility Parameters in Practice (HSPiP). Specifically, Sphere program of HSPiP is started, and each solvent used in the evaluation of the above solubility and dispersing ability is selected on the above program. Then, the scores of each solvent specified by the above method are input in the above program, calculation is carried out, so that $\delta D$, $\delta P$, and $\delta H$ are automatically calculated.

In general, the HSP of a specific substance (solute) may be determined by dissolving the sample of the substance in a wide variety of different solvents whose Hansen solubility parameters are established, and carrying out a test for measuring solubility. Specifically, a sphere (solubility sphere) is found out, which encompasses, among the solvents used in the above solubility test, all three-dimensional points of the solvents that can dissolve the substance in the inside of the sphere, on the outside of which the points of the solvents that cannot dissolve the substance are present, and the center coordinate of the sphere is defined as the HSP of the substance. Here, for example, when the HSP of another solvent that is not used in the measurement of the HSP of the above substance is $\delta D$, $\delta P$, $\delta H$, and the point indicated by the coordinates is encompassed in the inside of the solubility sphere of the above substance, it is considered that the solvent can dissolve the above substance. Meanwhile, when the coordinate point is on the outside of the solubility sphere of the above substance, it is considered that the solvent cannot dissolve the above substance.

In the present invention, inorganic materials that are generally considered to be insoluble in a solvent are also used as target substances, and in such a case, the HSP is calculated based on the dispersion, degree of aggregation, and degree of sedimentation of inorganic materials, and is not based on the solubility. Regarding this, for example, reference can be made to C. M. Hansen, A. L. Smith, Using Hansen Solubility Parameters to correlate Solubility of C60 fullerene in organic Solvents And in Polymers, Carbon, 42, pp 1591-1597, (2004).

When specific two components are focused, the distance between HSPs in the HSP space (Ra) is defined by the following equation (II), and is used as a dissolution or dispersion index whether two components are compatible with each other or dispersed.

$$Ra = \{4 \times (\delta D_1 - \delta D_2)^2 + (\delta P_1 - \delta P_2)^2 + (\delta H_1 - \delta H_2)^2\}^{0.5} \qquad \text{Equation (II)}$$

(In the equation (II), $\delta D_1$ and $\delta D_2$ represent dispersion terms of specific two molecules in the Hansen solubility parameter. Also, $\delta P$ and $\delta H$ respectively represent a polar term and a hydrogen bond term. Each unit is $(MPa)^{1/2}$.)

In the present invention, Ra is defined by the following equations (III) and (IV).

$$(Ra_{(D/R)})^2 = 4 \times (\delta D_D - \delta D_R)^2 + (\delta P_D - \delta P_R)^2 + (\delta H_D - \delta H_R)^2 \quad \text{Equation (III)}$$

$$(Ra_{(D/F)})^2 = 4 \times (\delta D_D - \delta D_F)^2 + (\delta P_D - \delta P_F)^2 + (\delta H_D - \delta H_F)^2 \quad \text{Equation (IV)}$$

(In the equation (III), $Ra_{(D/R)}$ represents a distance between HSPs of the dispersant (B) and the organopolysiloxane resin (C) that is different from the dispersant (B) in the HSP space. In the equation (IV), $Ra_{(D/F)}$ represents a distance between HSPs between the filler (A) having $\pi$ electrons and having a six-membered ring atomic structure as a structural unit and the dispersant (B) in the HSP space. Further, in the equations (III) and (IV), $\delta D_D$, $\delta P_D$, and $\delta H_D$ respectively represent $\delta D$, $\delta P$, and $\delta H$ of the dispersant (B). $\delta D_R$, $\delta P_R$, and $\delta H_R$ respectively represent $\delta D$, $\delta P$, and $\delta H$ of the organopolysiloxane resin (C). $\delta D_F$, $\delta P_F$, and $\delta H_F$ respectively represent $\delta D$, $\delta P$, and $\delta H$ of the filler (A).)

In the present embodiment, $Ra_{(D/R)}$ calculated by the above equation (III) has a numerical value range of 0.01 or more and 10.0 or less, and $Ra_{(D/F)}$ calculated by the above equation (IV) has a numerical value range of 8.6 or more and 30.0 or less.

When $Ra_{(D/R)}$ is more than 10.0, the resin composition is energetically unstable, the compatibility of the dispersant (B) with the organopolysiloxane resin (C) deteriorates, and it is difficult to impart an excellent flexibility to the resin composition. In the present invention, $Ra_{(D/R)}$ is preferably as low as possible, and when $Ra_{(D/R)}$ is less than 0.01, the structure of the dispersant (B) is hardly made into a structure different from the organopolysiloxane resin (C) which is a matrix resin, and the filler (A) is hardly dispersed due to the dispersant (B). From such viewpoints, $Ra_{(D/R)}$ is preferably 0.03 or more and 8.0 or less, and more preferably 0.05 or more and 7.5 or less.

When $Ra_{(D/F)}$ is more than 30.0, the resin composition is energetically unstable, the compatibility of the filler (A) with the dispersant (B) deteriorates, and it is difficult to impart an excellent flexibility to the resin composition. When $Ra_{(D/F)}$ is less than 8.6, the filler (A) may be difficult to have a six-membered ring atomic structure as a structural unit and $\pi$ electrons. From such viewpoints, $Ra_{(D/F)}$ is preferably 9.0 or more and 27.0 or less, and more preferably 11.0 or more and 20.0 or less.

In the present invention, a difference in polar term $\delta P$ between the dispersant (B) and the organopolysiloxane (C) ($|\delta P_{R-D}|$) is 4.2 or less. When $|\delta P_{R-D}|$ is more than 4.2, the polarity of the dispersant (B) becomes too large, the difference in polarity between the dispersant (B) and the organopolysiloxane resin (C) increases, the dispersants (B) are self-aggregated, and the dispersant (B) and the organopolysiloxane resin (C) are aggregated, so that the physicochemical force of attraction acting between molecules increases and the mobility of molecules deteriorates. Thus, it is difficult to impart an excellent flexibility to the resin composition. From such viewpoints, $|\delta P_{R-D}|$ is preferably 3.5 or less, and more preferably 2.5 or less. Meanwhile, the lower limit of $|\delta P_{R-D}|$ is not particularly limited, may be 0 or more, and is practically, for example, 0.05 or more, and preferably 0.08 or more.

When at least two or more of the filler (A), the dispersant (B), and the organopolysiloxane resin (C) are contained, $Ra_{(D/R)}$, $Ra_{(D/F)}$, and $|\delta P_{R-D}|$ are calculated between components in the resin composition, and the weighted average values are determined as $Ra_{(D/R)}$, $Ra_{(D/F)}$, and $|\delta P_{R-D}|$ in the entire resin composition.

For example, two types of a filler (A-1) and a filler (A-2) are contained as the filler (A) in total, a dispersant (B), and an organopolysiloxane resin (C) are contained, calculation is preferably carried out by the procedure of (1) to (3) shown below.

(1) $Ra_{(D/F)}$ between the filler (A-1) and the dispersant (B) is calculated and determined as $Ra_{(D/F)}$ (1).
(2) $Ra_{(D/F)}$ between the filler (A-2) and the dispersant (B) is calculated and determined as $Ra_{(D/F)}$ (2).
(3) $Ra_{(D/F)}$ (1) and $Ra_{(D/F)}$ (2) are weight-averaged according to the content ratio (in terms of mass) of the filler (A-1) and the filler (A-2) to determine $Ra_{(D/F)}$ of the entire resin composition. For example, when the formulation ratio of the filler (A-1) is $m_1$ and the formulation ratio of the filler (A-2) is $m_2$, $Ra_{(D/F)}$ of the entire resin composition is determined based on the following equation.

$$Ra_{(D/F)} = Ra_{(D/F)}\,(1) \times (m_1/(m_1 + m_2)) + Ra_{(D/F)}\,(2) \times (m_2/(m_1 + m_2))$$

Examples of the adjustment method for satisfying the above requirement (1) include selecting materials such that Ra values of the filler (A), the dispersant (B), and the organopolysiloxane resin (C) are close to one another. That is, each material may be selected so that the Ra value of the dispersant (B) falls between the Ra value of the filler (A) and the Ra value of the organopolysiloxane resin (C). For example, the above requirement (1) can be satisfied by designing a compound having both a molecular structure close to the main chain structure of the organopolysiloxane resin (C) and a conjugated structure close to the filler (A), as the dispersant (B).

Examples of the adjustment method for satisfying the above requirement (2) include adjusting the molecular weight of the dispersant (B) and the number of "B" per molecule in the formula (1).

[Filler (A)]

The filler (A) in the second embodiment may have $\pi$ electrons and have a six-membered ring atomic structure as a structural unit. Since the detailed description of the filler (A) and the description about the filler (A) such as the content of the filler (A) in the resin composition are as described in the first embodiment, the description thereof is omitted.

[Dispersant (B)]

The dispersant (B) is an organopolysiloxane. By using an organopolysiloxane, the dispersant (B) has favorable compatibility with the organopolysiloxane resin (C) mentioned later and $Ra_{(D/R)}$ is easily reduced. The organopolysiloxane used as the dispersant (B) preferably has a conjugated aromatic moiety having three or more and six or less conjugated aromatic six-membered rings. Since the conjugated aromatic moiety having three or more and six or less conjugated aromatic six-membered rings is a moiety having a large conjugated system in the molecular structure, $Ra_{(D/F)}$ as the index of the compatibility with the filler (A) is easily adjusted to a desired range.

Since the term "conjugated aromatic moiety having three or more and six or less conjugated aromatic six-membered rings" has the same meaning as "B" described in the formula (1) described above, the detailed description thereof is omitted.

The number of the above conjugated aromatic moiety, that is, the number of "B" per molecule is as described above, preferably 1 or more and 5 or less, more preferably 1 or 2, and most preferably 1. By reducing the number of the conjugated aromatic moieties, the polarity of the dispersant (B) is easily reduced and the difference in polar term $\delta P$ ($|\delta P_{R-D}|$) is also easily reduced.

The dispersant (B) is preferably the organopolysiloxane (B) having a structure represented by the formula (1) described above. Since the detail of the organopolysiloxane (B) having a structure represented by the formula (1), the content of the organopolysiloxane (B) (dispersant), and the like are as described in the first embodiment, the description thereof is omitted.

Since the dispersant (B) having a structure represented by the formula (1) has three or more and six or less conjugated aromatic six-membered rings, $Ra_{(D/F)}$ as a compatibility index of the filler (A) with the organopolysiloxane (B) is easily adjusted to a desired range, as described above. The dispersant (B) has a high affinity to the organopolysiloxane resin (C) having the same basic backbone, and $Ra_{(D/R)}$ is easily reduced. Further, in the dispersant (B) having the above structure, the presence of a heteroatom in the vicinity of the aromatic ring increases the rotational degree of freedom and enables various conformation to be taken in the vicinity of the aromatic ring. Thus, the polarity can also be prevented from being too high, and the difference in polar term $\delta P$ with the organopolysiloxane resin (C) ($|\delta P_{R-D}|$) can also be prevented from being increased.

The organopolysiloxane (B) having a structure represented by the formula (1) is preferably, for example, the organopolysiloxane (B) represented by the formula (2), the formula (3), or the formula (4), as described above. Among those described above, the dispersant (B) is preferably the organopolysiloxane (B) represented by the formula (2) or the formula (3), and more preferably has a structure represented by the above formula (2). When the dispersant (B) has a predetermined structure as above, it is easy to reduce the polarity value of the dispersant (B) (organopolysiloxane) and the difference in polarity ($|\delta P_{R-D}|$) in the resin composition, which will be mentioned later, and to enhance the flexibility of the resin composition.

Since the detail of the organopolysiloxane (B) having a structure represented by the formula (2), (3), or (4) is as described in the first embodiment, the description thereof is omitted.

The dispersant (B) may be used singly, or two or more may be used in combination.

The polar term $\delta P_D$ of the dispersant (B) is preferably 5.5 or less, more preferably 5.0 or less, and still more preferably 4.5 or less. When $\delta P_D$ is the above upper limit value or less, it is easy to adjust $Ra_{(D/R)}$, $Ra_{(D/F)}$, and $|\delta P_{R-D}|$ to a desired range and to suppress the self-aggregation of the dispersants (B). From these viewpoints, $\delta P_D$ is preferably as low as possible, and may be 0 or more.

Since the number-average molecular weight of the dispersant (B) is the same as the number-average molecular weight of the organopolysiloxane (B) described above, the description thereof is omitted.

The method for producing the dispersant (B) is not particularly limited, and for example, the dispersant (B) having a structure represented by the formula (1) may be produced by the method described in the above first embodiment. The resin composition may appropriately contain a by-product produced in the process of producing the organopolysiloxane dispersant (B), and the detail thereof is as described in the above first embodiment.

[Organopolysiloxane resin (C)]

The organopolysiloxane resin (C) in the second embodiment is an organopolysiloxane having a structure different from the dispersant (B) described above. The organopolysiloxane resin (C) is preferably a matrix resin like the organopolysiloxane (C) in the first embodiment. The detail, content, and the like of the organopolysiloxane resin (C) are as described for the organopolysiloxane (C) in the first embodiment.

(Other component)

The resin composition according to the second embodiment may contain a component other than the filler (A), the dispersant (B), and the organopolysiloxane resin (C) described above in a range not inhibiting the effect of the present invention, as necessary. The resin composition according to the second embodiment may contain a filler (D) other than the filler (A) as in the first embodiment. The detail, content, and the like of the filler (D) are as described in the first embodiment. As mentioned in the first embodiment, a curing catalyst or another component may be contained other than the filler (D).
The resin composition according to the first and second embodiments of the present invention preferably has a piercing load of 50 mN or less, more preferably 30 mN or less, and still more preferably 15 mN or less without particular limitation. By reducing the piercing load as described above, the resin composition can be said to be flexible. The lower limit of the piercing load is not particularly limited, and for example, may be 1 mN or more, and 2 mN or more. The piercing load is measured by the method described in Examples mentioned later.
Since the resin composition according to the first and second embodiment of the present invention is excellent in the thermal conductivity and flexibility, it can be suitably used for heat radiation materials such as silicone grease for heat radiation and a heat radiation silicone sheet. The resin composition according to the first and second embodiment of the present invention is preferably used in electronic devices for heat radiation of various electronic components. Specifically, the resin composition can effectively radiate heat generated from an electronic component such as a semiconductor device by being arranged, for example, between the electronic component and a heat sink in a cured state, as necessary.

Examples

Hereinafter, the present invention will be demonstrated by way of specific Examples and Comparative Examples of the present invention. The present invention is not limited to examples below.

<First embodiment>

Hereinafter, the first embodiment of the present invention will be described by way of Examples and Comparative Examples.

[Molecular weight]

The number-average molecular weight of each compound was measured under the following conditions.
Measurement was carried out using "APC system" manufactured by Waters as the measurement apparatus, HSPgel HR MB-M 6.0 × 150 mm as a column, and THF as solvent liquid under a flow rate of 0.5 mL/min at a temperature of 40°C.

[Flexibility evaluation (1)]

The flexibility of the silicone resin composition was evaluated by the piercing load measured by the following method. The lower the piercing load, the higher the flexibility of the silicone resin composition.
The resin composition was defoamed, and 30 g of the defoamed resin composition was introduced into a cylindrical container having a diameter of 25 mm. Then, a piercing rod (rod diameter: 1.8 mm) having a disk-shaped member having a diameter of 2 mm and a thickness of 1 mm at the tip was pressed onto the resin composition introduced into the container from the tip side of the piercing rod at a rate (piercing rate) of 10 mm/minute, and the load (mN) when the tip of the piercing rod reached a depth of 2 mm from the liquid surface was measured. Evaluation was carried out under the following evaluation criteria based on the measured load. The material of the piercing rod was stainless. The measurement was carried out at 25°C, and the measurement of the load was carried out using "ZTS-5N" manufactured by IMADA.

AA: 15 mN or less
A: more than 15 mN and 30 mN or less
B: more than 30 mN and 50 mN or less

C: more than 50 mN

[Flexibility evaluation (2)]

The flexibility of the silicone resin composition was evaluated by kinematic viscosity. The lower the kinematic viscosity, the higher the flexibility of the silicone resin composition. The kinematic viscosity was measured using "TV-25" manufactured by Toki Sangyo Co., Ltd at 25°C.

AA: 150 $mm^2/s$ or less
A: more than 150 $mm^2/s$ and 200 $mm^2/s$ or less
B: more than 200 $mm^2/s$ and 250 $mm^2/s$ or less
C: more than 250 $mm^2/s$

In Examples and Comparative Examples for the first embodiment, those synthesized in the following Synthetic Examples A1 to A13 and Comparative Synthetic Examples A1 to A5 were used as the organopolysiloxane (B).

<Synthetic Example A1>

98.6 g of an organosiloxane compound (n = 210) having a 1,3-diol group represented by the formula (15), 1.4 g of 1-pyrenecarboxyaldehyde as the monomer, 50 g of toluene as the solvent, and further, 0.6 g of a catalyst ("Amberlyst 15 dry" manufactured by ORGANO CORPORATION) were reacted in a nitrogen atmosphere at 100°C for 24 hours. After the reaction, the reaction mixture was filtered through a 5.0 μm PTFE filter to remove the catalyst, and the filtrate was concentrated using a rotary evaporator and a vacuum dryer to obtain the organopolysiloxane of Synthetic Example A1. The reaction formula is as follows. The following reaction was confirmed to be proceeded by $^1H$ NMR measurement. Measurement was carried out using "ECX-400" manufactured by JEOL as an NMR measurement apparatus and a heavy chloroform as a solvent under the conditions of a sample concentration of 1% by mass, 25°C, a measurement frequency of 400 MHz, and a cumulative number of 8. The progress of the reaction was also confirmed by $^1H$ NMR measurement for other Synthetic Examples and Comparative Synthetic Examples.

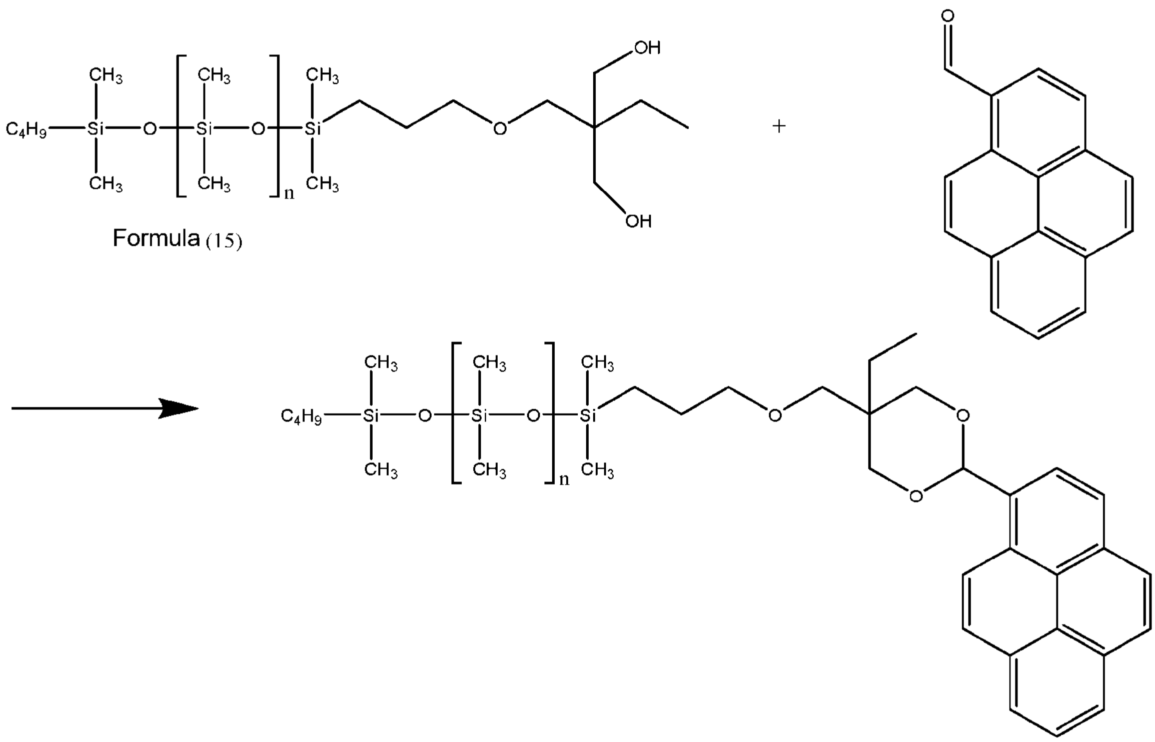

Formula (15)

<Synthetic Example A2>

The synthesis was carried out in the same manner as in Synthetic Example A1 except that the monomer was changed to 1.7 g of 3-perylenecarboxyaldehyde, thereby obtaining the organopolysiloxane of Synthetic Example A2. The

reaction formula is as follows.

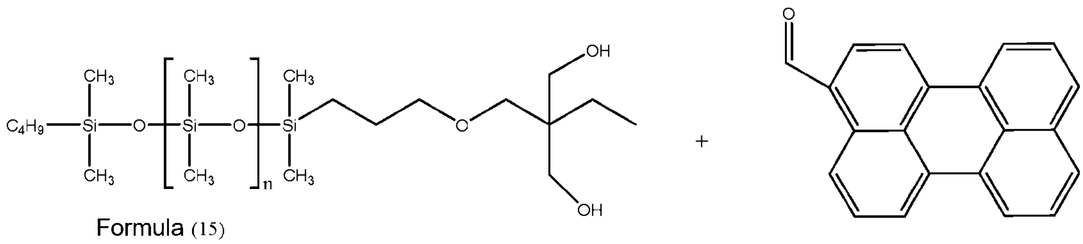

Formula (15)

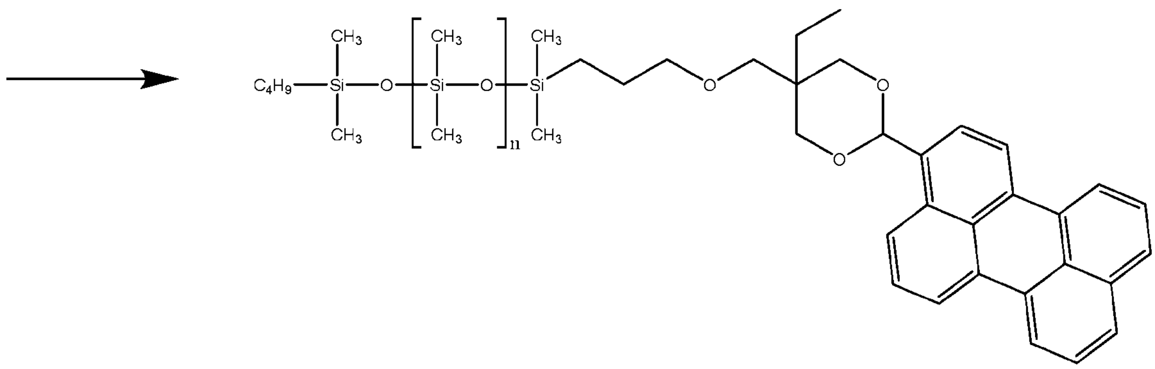

<Synthetic Example A3>

The synthesis was carried out in the same manner as in Synthetic Example A1, except that the organosiloxane compound of the formula (15) was changed to the compound of n = 70 and the amount of 1-pyrenecarboxyaldehyde was changed to 4.2 g, thereby obtaining the organopolysiloxane of Synthetic Example A3. The reaction formula is omitted since it is the same as Synthetic Example A1, except that the compound of the formula (15) was changed to the compound of n = 70.

<Synthetic Example A4>

The organopolysiloxane of Synthetic Example A4 was obtained in the same manner as in Synthetic Example A3, except that the monomer was changed to 5.1 g of 3-perylenecarboxyaldehyde.

<Synthetic Example A5>

98.6 g of the organosiloxane compound (n = 70) having a hydrosilyl group represented by the formula (16), 5.5 g of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. Then, the reaction liquid was concentrated with a rotary evaporator and a vacuum dryer to obtain the organopolysiloxane of Synthetic Example A5. The reaction formula is as follows.

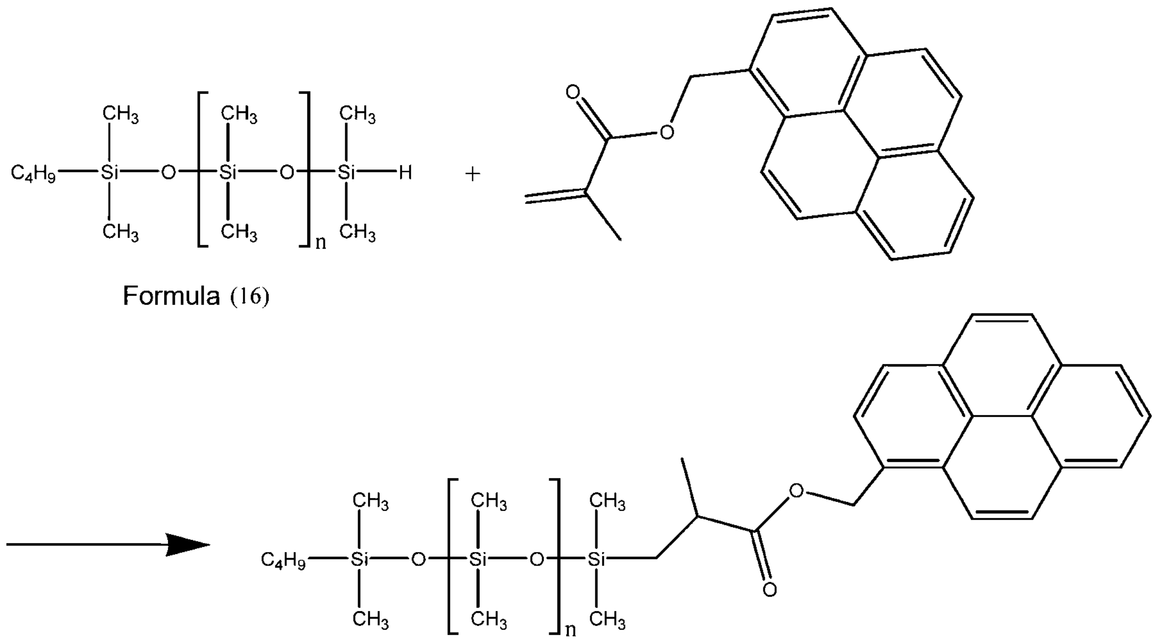

Formula (16)

<Synthetic Example A6>

The organopolysiloxane of Synthetic Example A6 was obtained in the same manner as in Synthetic Example A5, except that the monomer was changed to 5.7 g of 2-(1-pyrene)ethylmethacrylate. The reaction formula is as follows.

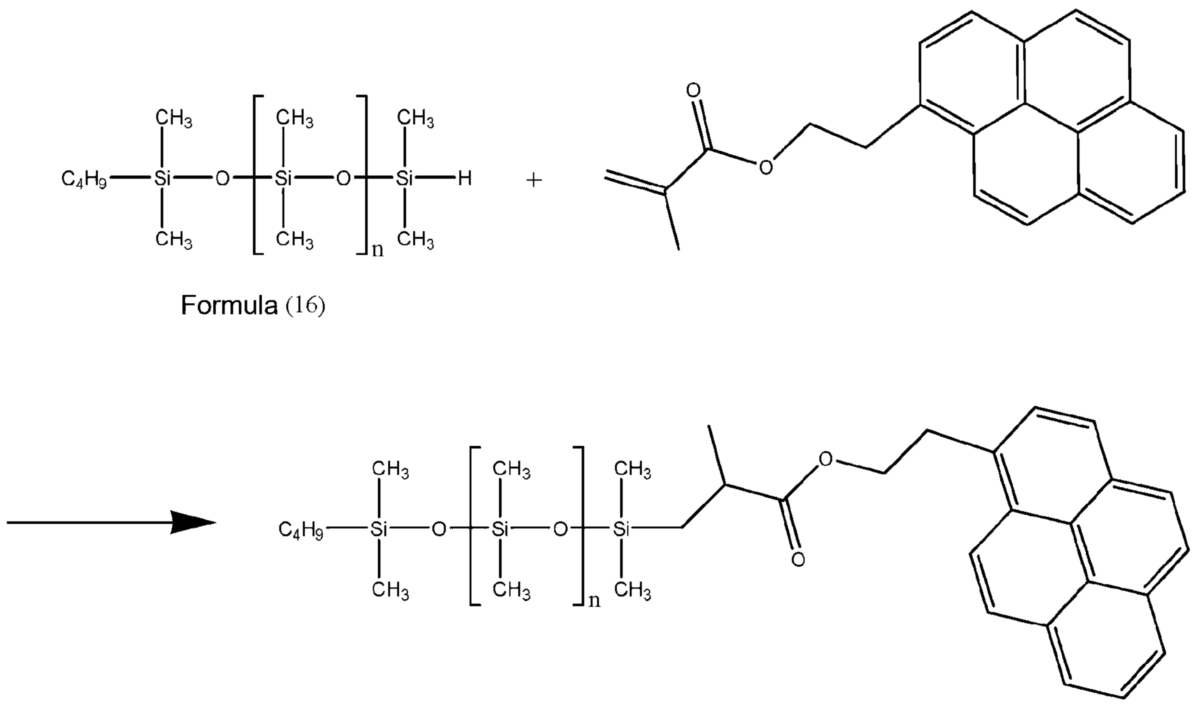

Formula (16)

<Synthetic Example A7>

The organopolysiloxane of Synthetic Example A7 was obtained in the same manner as in Synthetic Example A5, except that the monomer was changed to 5.3 g of 1-pyrenemethacrylate. The reaction formula is as follows.

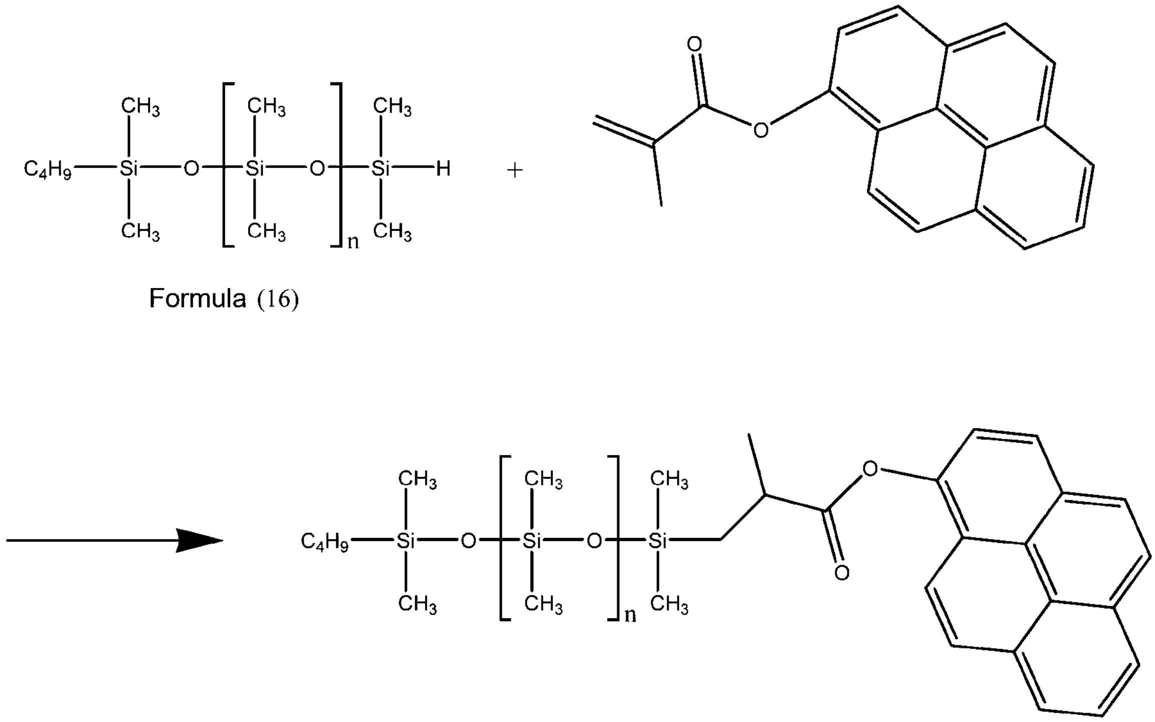

Formula (16)

<Synthetic Example A8>

98.6 g of the organosiloxane compound (n = 70) having a hydrosilyl group represented by the formula (17), 11 g of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. The reaction liquid was concentrated with a rotary evaporator and a vacuum dryer to obtain the organopolysiloxane of Synthetic Example A7. The reaction formula is as follows.

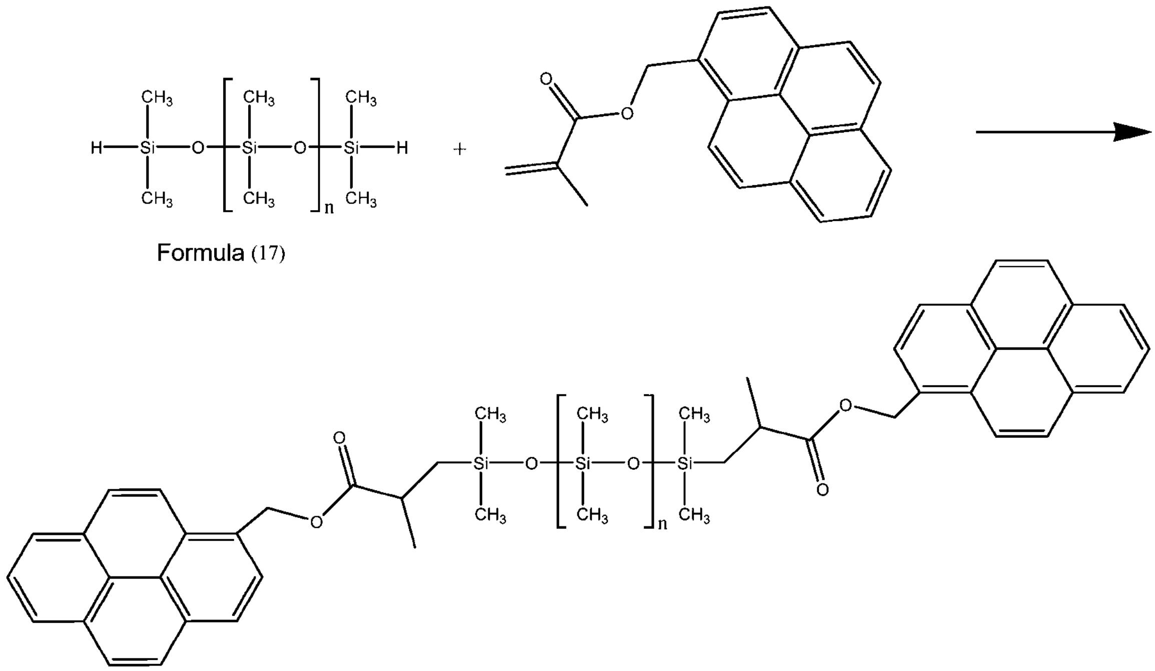

Formula (17)

<Synthetic Example A9>

98.6 g of the organosiloxane compound (n = 70) having a hydrosilyl group represented by the formula (18), 5.5 g

of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. The reaction liquid was concentrated with a rotary evaporator and a vacuum dryer to obtain the organopolysiloxane of Synthetic Example A9. The reaction formula is as follows.

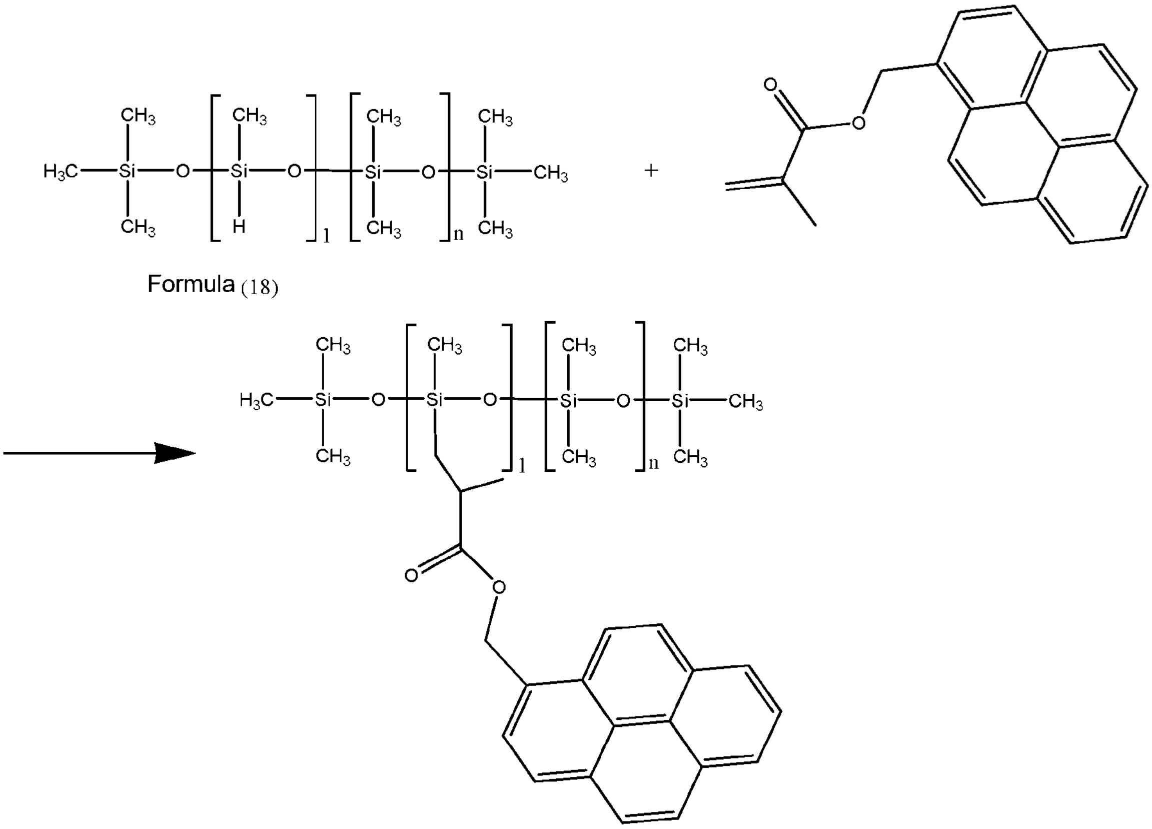

Formula (18)

<Synthetic Example A10>

98.6 g of the organosiloxane compound (n = 70) having a hydrosilyl group represented by the formula (19), 22 g of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. The reaction liquid was concentrated with a rotary evaporator and a vacuum dryer to obtain the organopolysiloxane of Synthetic Example A10. The reaction formula is as follows.

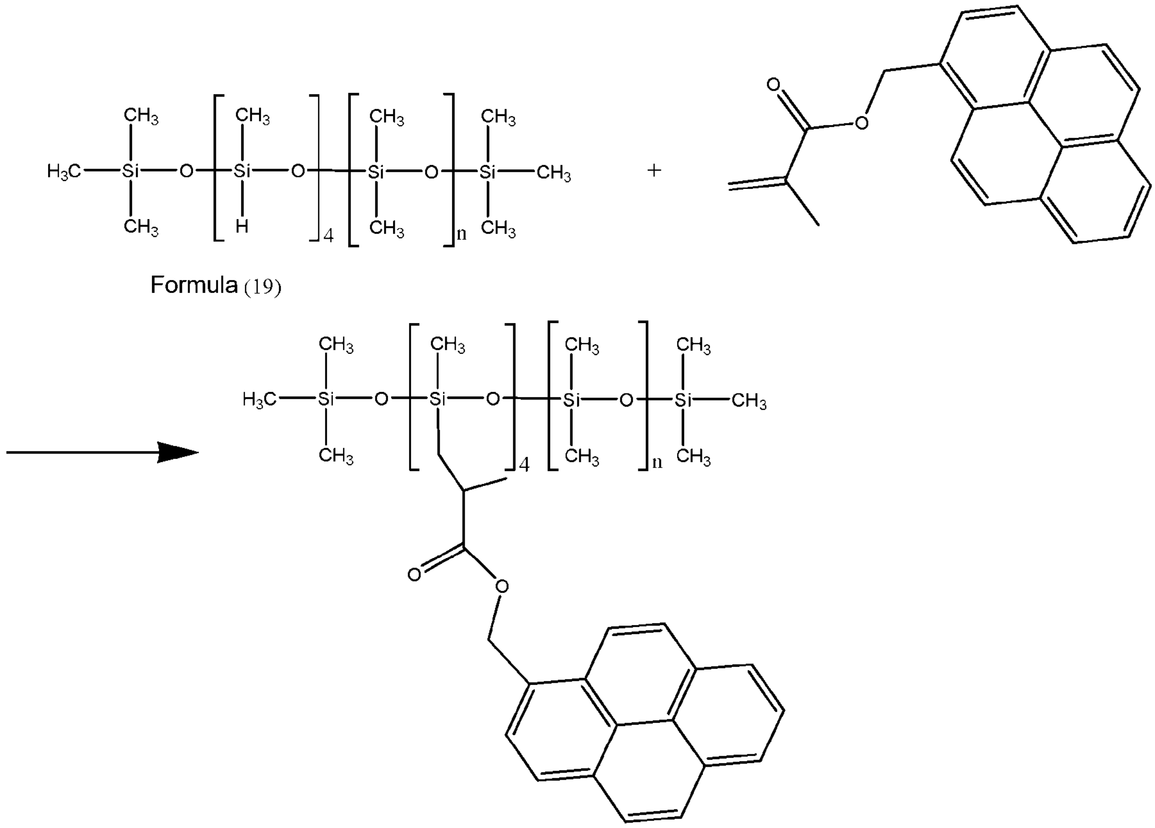

Formula (19)

<Synthetic Example A11>

The organopolysiloxane of Synthetic Example A11 was obtained in the same manner as in Synthetic Example A1, except that the monomer was changed to 1.5 g of [1,1':4',1"]terphenylcarboxyaldehyde. The reaction formula is as follows.

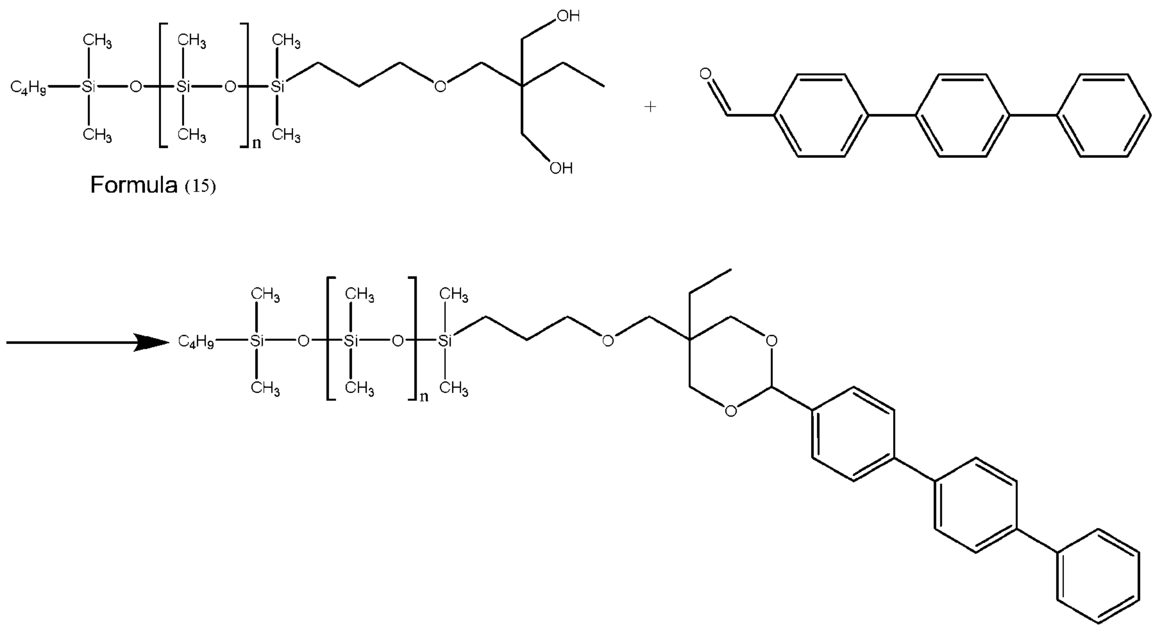

Formula (15)

<Synthetic Example A12>

The organopolysiloxane of Synthetic Example A12 was obtained in the same manner as in Synthetic Example

A1, except that the monomer was changed to 1.2 g of 9-anthracenecarboxyaldehyde. The reaction formula is as follows.

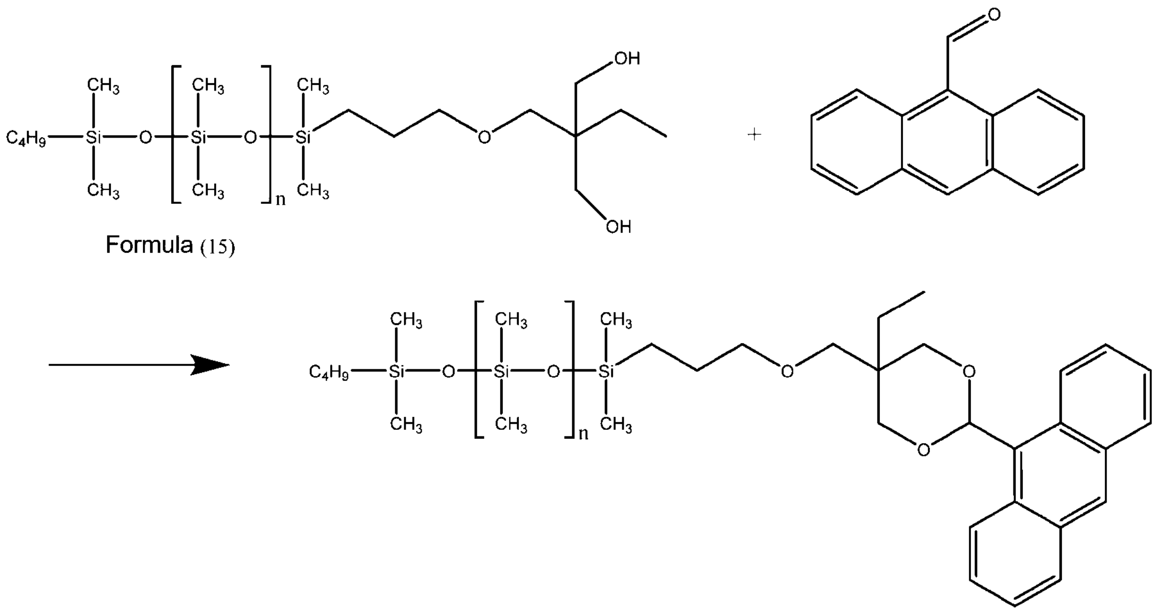

Formula (15)

<Synthetic Example A13>

The organopolysiloxane of Synthetic Example A13 was obtained in the same manner as in Synthetic Example A1, except that the monomer was changed to 1.4 g of 1-pyreneacetaldehyde. The reaction formula is as follows.

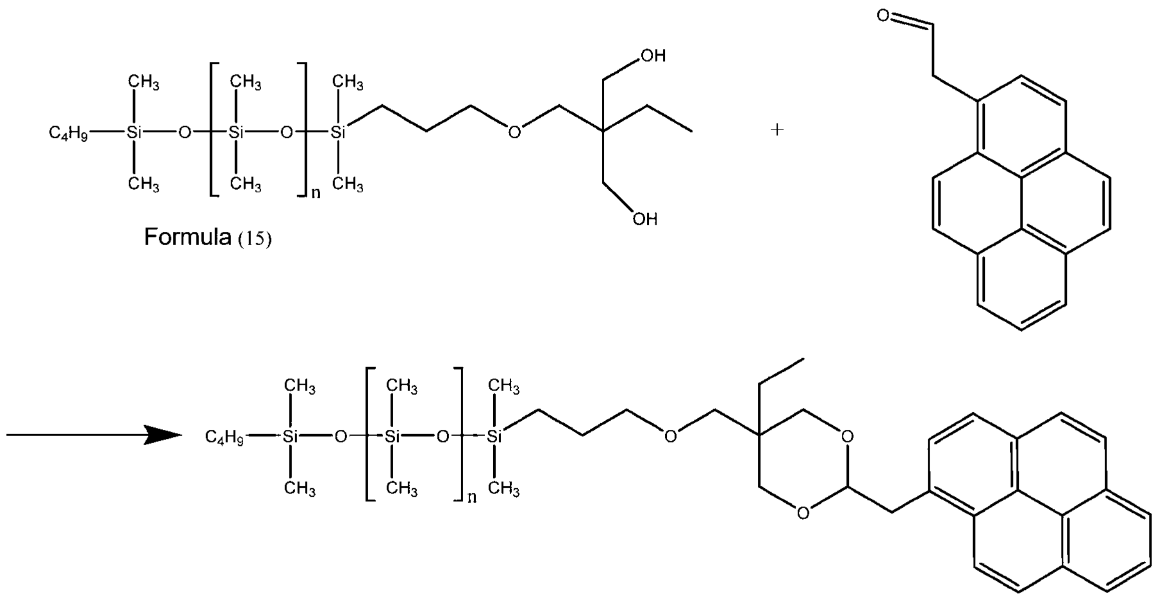

Formula (15)

<Comparative Synthetic Example A1>

The organopolysiloxane of Comparative Example 1 was obtained in the same manner as in Synthetic Example A1, except that the monomer was changed to 0.97 g of 2-naphthaldehyde. The reaction formula is as follows.

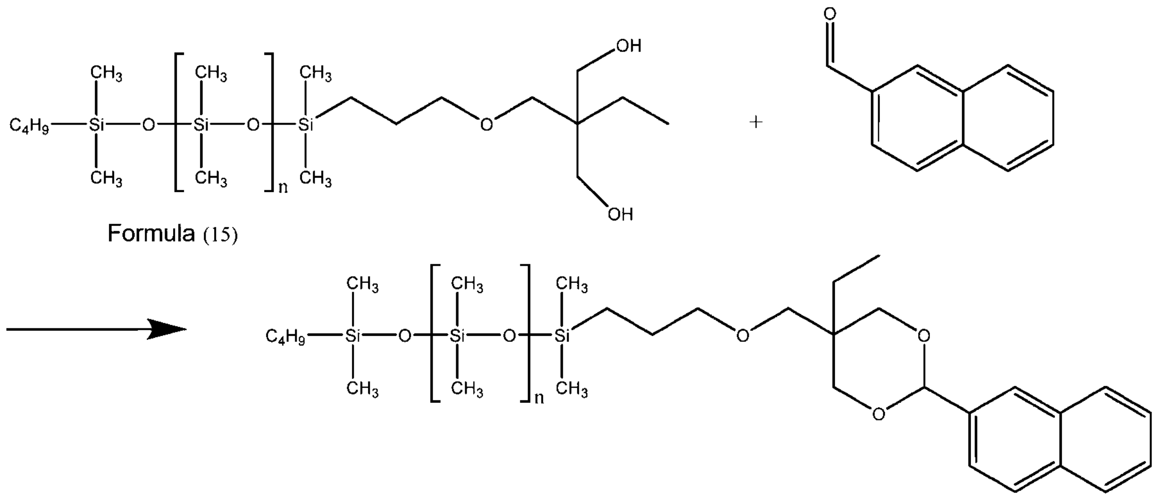

Formula (15)

<Comparative Synthetic Example A2>

The organopolysiloxane of Comparative Example 2 was obtained in the same manner as in Synthetic Example A1, except that the monomer was changed to 2.0 g of 1-coronenecarboxyaldehyde. The reaction formula is as follows.

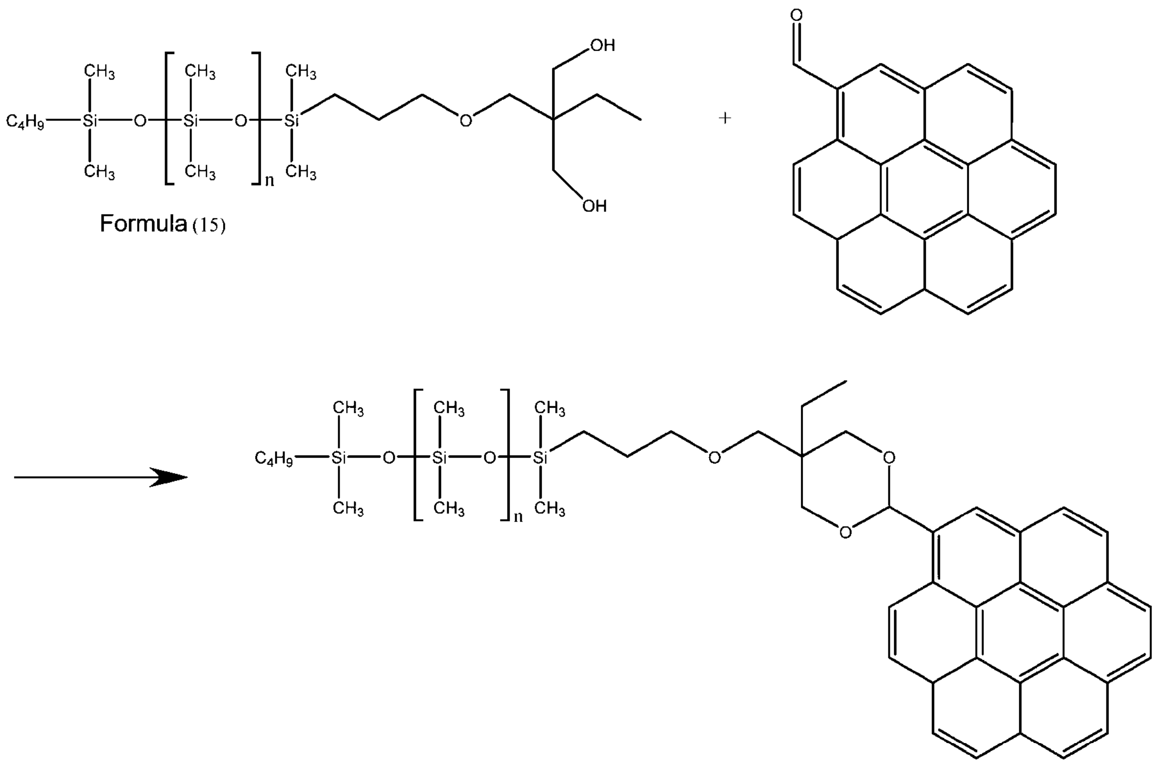

Formula (15)

<Comparative Synthetic Example A3>

The organopolysiloxane of Comparative Example 3 was obtained in the same manner as in Synthetic Example A4, except that the monomer was changed to 5.9 g of 3-(1-pyrene)propylmethacrylate. The reaction formula is as follows.

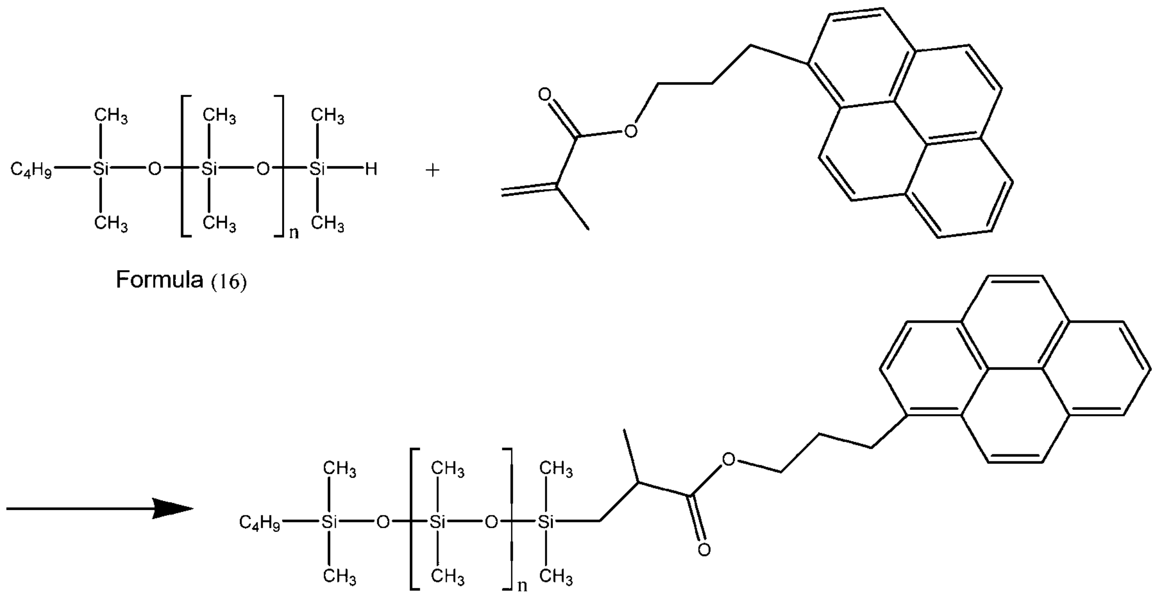

Formula (16)

<Comparative Synthetic Example A4>

9.7 g of the organosiloxane compound (n = 140) having a monool group represented by the formula (20), 0.3 g of 1-pyrenebutanoic acid as the monomer, 30 g of tetrahydrofuran as the solvent, 0.3 g of N,N'-dicyclohexylcarbodiimide as the condensing agent, and 0.1 g of N,N-dimethyl-4-aminopyridine were used. They were reacted under a nitrogen atmosphere at 0°C for 24 hours, and the reaction liquid was concentrated using a rotary evaporator. After the concentration, the precipitate was removed by centrifugation to obtain the organopolysiloxane of Comparative Example 4 as a supernatant. The reaction formula is as follows.

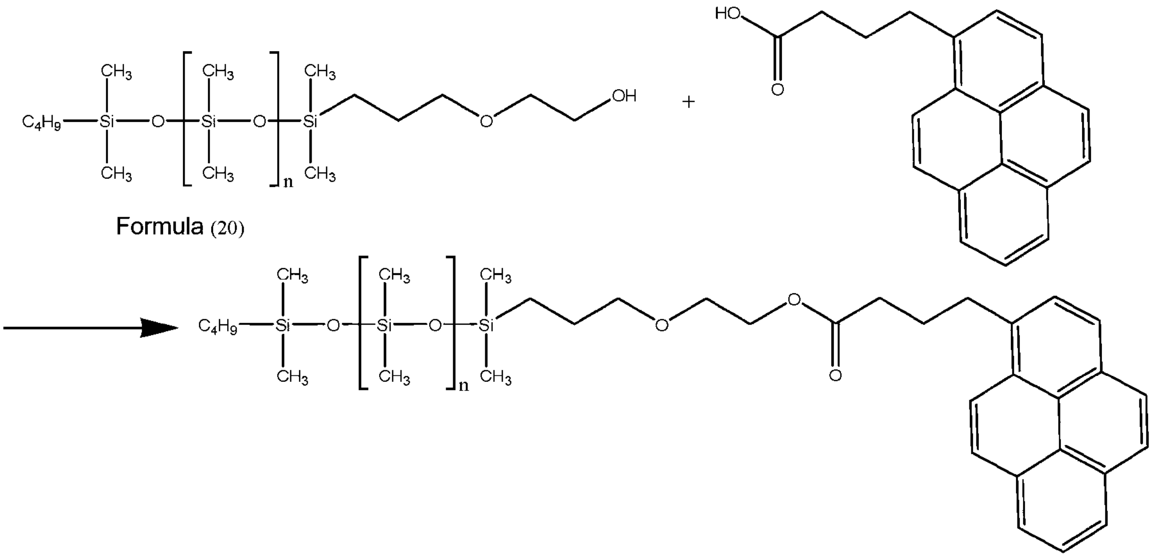

Formula (20)

<Comparative Synthetic Example A5>

The organopolysiloxane of Comparative Synthetic Example A5 was obtained in the same manner as in Synthetic Example A9, except that the monomer was changed to 3.8 g of 1-vinyl pyrene. The reaction formula is as follows.

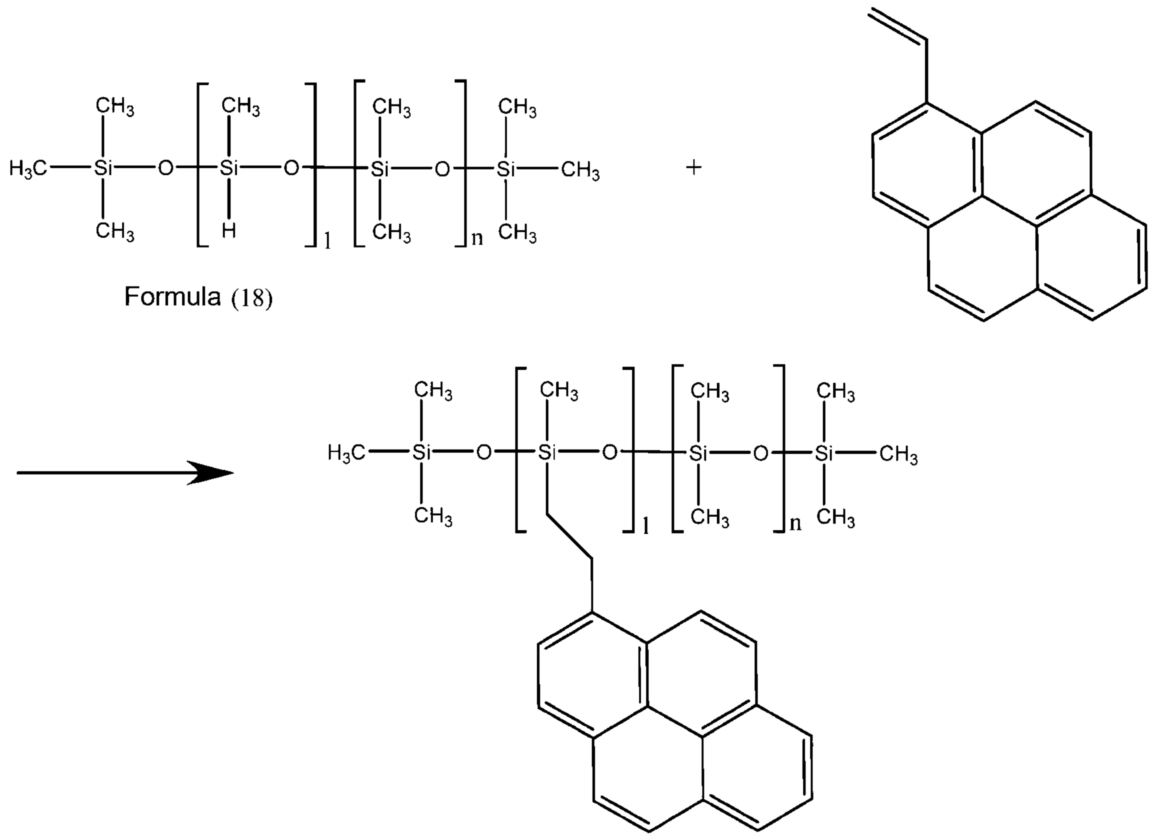

Formula (18)

<Comparative Synthetic Example A6>

The polyorganosiloxane of Comparative Example 7 was obtained in the same manner as in Comparative Synthetic Example 4, except that the organopolysiloxane (n = 140) represented by the following formula (21) was used instead of the organopolysiloxane compound represented by the formula (20) used in Comparative Synthetic Example A4. The reaction formula is as follows.

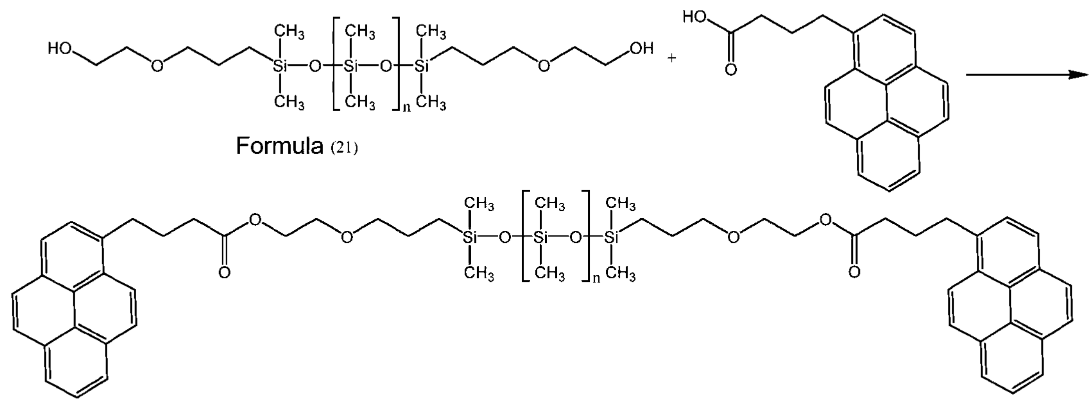

Formula (21)

The filler (A) and organopolysiloxane (C) used in each Example and Comparative Example according to the first embodiment were as follows.

[Filler (A)]

Graphite: graphite powder, average particle size 10 μm, scaly graphite
Boron nitride: hexagonal boron nitride (h-BN), average particle size 45 μm, scaly

Carbon fiber: graphitized carbon fiber, average diameter 10 μm, average fiber length 110 μm
Boron nitride nanotube (BNNT): average diameter 40 nm, average length 100 μm

[Organopolysiloxane (C)]

Organopolysiloxane, number-average molecular weight 25000

[Examples A1 to A19, Comparative Examples A1 to A6] The filler (A), the organopolysiloxane (B), and the organopolysiloxane (C) were mixed according to the formulation in Table 1 to obtain each silicone resin composition. For the obtained silicone resin compositions, the piercing load was measured and the flexibility was evaluated. Evaluation results are shown in Table 1.

[Table 1]

| | Filler (A) | | | Organopolysiloxane (B) | | | | | | | | | | | | | Component (C) | Evaluation (flexibility) | |
|---|---|---|---|---|---|---|---|---|---|---|---|---|---|---|---|---|---|---|---|
| | Type | Specific surface area [cm2/-g] | Amount formulated (parts by mass) | Type | B: number of conjugated rings | Hetero atom position | n | A-B introduction position | m | B structure | B structure | A: number of carbon atoms | The number of conjugated aromatic rings per molecule | Number-average molecular weight | Amount formulated (parts by mass) | X value | Amount formulated (parts by mass) | Piercing load [mN] | Evaluation |
| Example A1 | Graphite | 7.3 | 5.13 | Synthetic Example A1 | 4 | β | 21-0 | One end | - | Condensed rina | Pyrene | 10 | 4 | 15200 | 0.755 | 5.31E--06 | 6.795 | 18 | A |
| Example A2 | Graphite | 7.3 | 5.13 | Synthetic Example A2 | 5 | β | 21-0 | One end | - | Condensed rina | Perylene | 10 | 5 | 15200 | 0.755 | 6.63E--06 | 6.795 | 5 | AA |
| Example A3 | Boron nitride | 0.6 | 5.13 | Synthetic Example A1 | 4 | β | 21-0 | One end | - | Condensed rina | Pyrene | 10 | 4 | 15200 | 0.755 | 6.45E--05 | 6.795 | 21 | A |
| Example A4 | Boron nitride | 0.6 | 5.13 | Synthetic Example A2 | 5 | β | 21-0 | One end | - | Condensed rina | Perylene | 10 | 5 | 15200 | 0.755 | 8.07E--05 | 6.795 | 8 | AA |
| Example A5 | Carbon fiber | 0.7 | 5.13 | Synthetic Example A1 | 4 | β | 21-0 | One end | - | Condensed rina | Pyrene | 10 | 4 | 15200 | 0.755 | 5.53E--05 | 6.795 | 29 | A |
| Example A6 | Carbon fiber | 0.7 | 5.13 | Synthetic Example A2 | 5 | β | 21-0 | One end | - | Condensed rina | Perylene | 10 | 5 | 15200 | 0.755 | 6.92E--05 | 6.795 | 18 | A |
| Example A7 | Graphite | 7.3 | 5.13 | Synthetic Example A3 | 4 | β | 70 | One end | - | Condensed rina | Pyrene | 10 | 4 | 5200 | 0.755 | 1.55E--05 | 6.795 | 19 | A |
| Example A8 | Graphite | 7.3 | 5.13 | Synthetic Example A4 | 5 | β | 70 | One end | - | Condensed rina | Perylene | 10 | 5 | 5300 | 0.755 | 1.90E--05 | 6.795 | 12 | AA |

(continued)

| | Filler (A) | | | Organopolysiloxane (B) | | | | | | | | | | | | | Component (C) | Evaluation (flexibility) | |
|---|---|---|---|---|---|---|---|---|---|---|---|---|---|---|---|---|---|---|---|
| | Type | Specific surface area [cm2/-g] | Amount formulated (parts by mass) | Type | B: number of conjugated rings | Hetero atom position | n | A-B introduction position | m | B structure | B structure | A: number of carbon atoms | The number of conjugated aromatic rings per molecule | Number-average molecular weight | Amount formulated (parts by mass) | X value | Amount formulated (parts by mass) | Piercing load [mN] | Evaluation |
| Example A9 | Graphite | 7.3 | 5.13 | Synthetic Example A5 | 4 | β | 70 | One end | - | Condensed rina | Pyrene | 5 | 4 | 5300 | 0.755 | 1.52E--05 | 6.795 | 15 | AA |
| Example A10 | Graphite | 7.3 | 5.13 | Synthetic Example A6 | 4 | γ | 70 | One end | - | Condensed rina | Pyrene | 6 | 4 | 5300 | 0.755 | 1.52E--05 | 6.795 | 20 | A |
| Example A11 | Graphite | 7.3 | 5.13 | Synthetic Example A7 | 4 | a | 70 | One end | - | Condensed rina | Pyrene | 4 | 4 | 5300 | 0.755 | 1.52E--05 | 6.795 | 14 | AA |
| Example A12 | Graphite | 7.3 | 5.13 | Synthetic Example A8 | 4 | β | 70 | Both ends | - | Condensed rina | Pyrene | 5 | 8 | 5600 | 0.755 | 2.88E--05 | 6.795 | 17 | A |
| Example A13 | Graphite | 7.3 | 5.13 | Synthetic Example A9 | 4 | β | 70 | Side chain | 1 | Condensed rina | Pyrene | 5 | 4 | 5300 | 0.755 | 1.52E--05 | 6.795 | 22 | A |
| Example A14 | Graphite | 7.3 | 5.13 | Synthetic Example A10 | 4 | β | 70 | Side chain | 4 | Condensed ring | Pyrene | 5 | 16 | 6200 | 0.755 | 5.20E--05 | 6.795 | 45 | B |
| Example A15 | Graphite | 7.3 | 5.13 | Synthetic Example A11 | 3 | β | 21-0 | One end | - | Noncondensed rina | Terphenyl | 10 | 3 | 15300 | 0.755 | 3.95E--06 | 6.795 | 48 | B |
| Example A16 | Graphite | 7.3 | 5.13 | Synthetic Example A12 | 3 | β | 21-0 | One end | - | Condensed ring | Anthracene | 10 | 3 | 15200 | 0.755 | 3.98E--06 | 6.795 | 47 | B |

(continued)

| | Filler (A) | | | Organopolysiloxane (B) | | | | | | | | | | | | | Component (C) | Evaluation (flexibility) | |
|---|---|---|---|---|---|---|---|---|---|---|---|---|---|---|---|---|---|---|---|
| | Type | Specific surface area [cm2/-g] | Amount formulated (parts by mass) | Type | B: number of conjugated rings | Hetero atom position | n | A-B introduction position | m | B structure | B structure | A: number of carbon atoms | The number of conjugated aromatic rings per molecule | Number-average molecular weight | Amount formulated (parts by mass) | X value | Amount formulated (parts by mass) | Piercing load [mN] | Evaluation |
| Example A17 | Graphite | 7.3 | 5.13 | Synthetic Example A13 | 4 | γ | 21-0 | One end | - | Condensed ring | Pyrene | 11 | 4 | 15200 | 0.755 | 5.31E--06 | 6.795 | 42 | B |
| Example A18 | Graphite | 7.3 | 5.13 | Synthetic Example A1 | 4 | β | 21-0 | One end | - | Condensed rina | Pyrene | 10 | 4 | 15200 | 0.0755 | 5.31 E-07 | 7.4745 | 41 | B |
| Example A19 | Graphite | 7.3 | 5.13 | Synthetic Example A10 | 4 | β | 70 | Side chain | 4 | Condensed ring | Pyrene | 5 | 16 | 6200 | 2.265 | 1.56E--04 | 5.285 | 44 | B |
| Comparative Example A1 | Graphite | 7.3 | 5.13 | Comparative Synthetic Example A1 | 2 | β | 21-0 | One end | - | Condensed ring | Naphthalene | 10 | 2 | 15100 | 0.755 | 2.67E--06 | 6.795 | 60 | C |
| Comparative Example A2 | Graphite | 7.3 | 5.13 | Comparative Synthetic Example A2 | 7 | β | 21-0 | One end | - | Condensed ring | Coronene | 10 | 7 | 15400 | 0.755 | 9.16E--06 | 6.795 | 76 | C |
| Comparative Example A3 | Graphite | 7.3 | 5.13 | Comparative Synthetic Example A3 | 4 | Δ | 70 | One end | - | Condensed ring | Pyrene | 7 | 4 | 5300 | 0.755 | 1.52E--05 | 6.795 | 52 | C |
| Comparative Example A4 | Graphite | 7.3 | 5.13 | Comparative Synthetic Example A4 | 4 | E | 14-0 | One end | - | Condensed ring | Pyrene | 9 | 4 | 10300 | 0.755 | 7.83E--06 | 6.795 | 54 | C |

(continued)

| | Filler (A) | | | Organopolysiloxane (B) | | | | | | | | | | | | | Component (C) | Evaluation (flexibility) | |
|---|---|---|---|---|---|---|---|---|---|---|---|---|---|---|---|---|---|---|---|
| | Type | Specific surface area [cm2/g] | Amount formulated (parts by mass) | Type | B: number of conjugated rings | Hetero atom position | n | A-B introduction position | m | B structure | B structure | A: number of carbon atoms | The number of conjugated aromatic rings per molecule | Number-average molecular weight | Amount formulated (parts by mass) | X value | Amount formulated (parts by mass) | Piercing load [mN] | Evaluation |
| Comparative Example A5 | Graphite | 7.3 | 5.13 | Comparative Synthetic Example A5 | 4 | - | 70 | Side chain | - | Condensed ring | Pyrene | 2 | 4 | 5200 | 0.755 | 1.55E--05 | 6.795 | 54 | C |
| Comparative Example A6 | Graphite | 7.3 | 5.13 | Comparative Synthetic Example A6 | 4 | E | 140 | Both ends | - | Condensed ring | Pyrene | 9 | 8 | 10600 | 0.755 | 1.52E--05 | 6.795 | 56 | C |

[Examples A20 and A21, Comparative Example A7]

The filler (A), the organopolysiloxane (B), and the organopolysiloxane (C) were mixed according to the formulation in Table 2 to obtain each silicone resin composition. For the obtained silicone resin compositions, the kinematic viscosity was measured and the flexibility was evaluated. Evaluation results are shown in Table 2.

[Table 2]

| | Filler (A) | | | Organopolysiloxane (B) | | | | | | | | | | | | | Component (C) | Evaluation (flexibility) | |
|---|---|---|---|---|---|---|---|---|---|---|---|---|---|---|---|---|---|---|---|
| | Type | Specific surface area [cm2/g] | Amount formulated (parts by mass) | Type | B: number of conjugated rings | Hetero atom position | n | A-B introduction position | m | B structure | B structure | A: number of carbon atoms | The number of conjugated aromatic rings per molecule | Number-average molecular weight | Amount formulated (parts by mass) | X value | Amount formulated (parts by mass) | Viscosity [$mm^2/s$] | Evaluation |
| Example A20 | BNNT | 230 | 0.01 | Synthetic Example A1 | 4 | β | 210 | One end | - | Condensed rina | Pyrene | 10 | 4 | 15200 | 0.1485 | 1.70E--05 | 0.8415 | 132 | AA |
| Example A21 | BNNT | 230 | 0.01 | Synthetic Example A12 | 3 | β | 210 | One end | - | Condensed ring | Anthracene | 10 | 3 | 15200 | 0.1485 | 1.27E--05 | 0.8415 | 250 | B |
| Comparative Example A7 | BNNT | 230 | 0.01 | Comparative Synthetic Example A1 | 2 | β | 210 | One end | - | Condensed ring | Naphthalene | 10 | 2 | 15100 | 0.1485 | 8.55E--06 | 0.8415 | 310 | C |

In each of the above Examples, the flexibility of the silicone resin composition was improved by using the organopolysiloxane (B) which has three or more and six or less conjugated aromatic six-membered rings and in which any of the $\alpha$-position atom bonded to the aromatic six-membered ring, the $\beta$-position atom, and the $\gamma$-position atom is a heteroatom, in combination with the filler (A) and the organopolysiloxane (C).

In contrast, the flexibility of the silicone resin composition was not successfully improved even when each organopolysiloxane (B) of the above Comparative Examples which does not have three or more and six or less conjugated aromatic six-membered rings or none of the $\alpha$-position atom bonded to an aromatic six-membered ring, the $\beta$-position atom, and the $\gamma$-position atom have a heteroatom, was used in combination with the filler (A) and the organopolysiloxane (C).

As shown in Table 2, even when a boron nitride nanotube was used as the filler (A), the viscosity was reduced and the flexibility was improved by using the organopolysiloxane (B), as compared with Comparative Example 6 in which no organopolysiloxane (B) was used.

<Second embodiment>

Next, Examples and Comparative Examples according to the second embodiment of the present invention will be described.

[Hansen solubility parameter]

As shown below, each filler was subjected to a dispersing ability test with respect to 28 types of solvents whose HSPs are known. As shown below, each component other than the filler was subjected to a solubility test with respect to 28 types of solvents whose HSPs are known.

$\delta D$, $\delta P$, and $\delta H$ of each component were determined based on the dispersing ability and the solubility using a software for Microsoft Windows, Hansen Solubility Parameters in Practice (HSPiP). $Ra_{(D/R)}$, $Ra_{(D/F)}$, and $|\delta P_{R-D}|$ were calculated based on $\delta D$, $\delta P$, and $\delta H$, as described in the description.

(Dispersing ability test)

0.2 g of each filler and 4 mL of each solvent shown below were added to a container (a screw tube No. 3 type manufactured by Maruemu Corporation), the container was shaken using a mixing rotor, model number: VMR-5R manufactured by AS ONE Corporation under the conditions of an ambient temperature (25°C) for 0.5 hours at 50 rpm, the container after being allowed to stand still for 30 minutes was observed, and the dispersing ability was evaluated based on the following ranks. The mixture in which the filler was completely dispersed and no precipitate was found was evaluated as rank 1, one in which 20% was precipitated was evaluated as rank 2, one in which the half was precipitated was evaluated as rank 3, one in which 80% was precipitated was evaluated as rank 4, and one in which the filler was completely precipitated was evaluated as rank 5.

(Solubility test)

0.2 g of each component other than the filler and 4 mL of each solvent shown below were added to a container (a screw tube No. 3 type manufactured by Maruemu Corporation), the container was shaken using a mixing rotor, model number: VMR-5R manufactured by AS ONE Corporation under the conditions of an ambient temperature (25°C) for 0.5 hours at 50 rpm, the container after being allowed to stand still for 60 minutes was observed, and the solubility was evaluated based on the following ranks. The mixture in which the component was completely dissolved was evaluated as rank 1, one in which 80% was dissolved (the original shape was broken) was evaluated as rank 2, one in which 50% was dissolved was evaluated as rank 3, one in which 20% was dissolved was evaluated as rank 4, and one in which the component was insoluble was evaluated as rank 5.

(Solvents used)

Ethyl acetate, acetone, toluene, tetrahydrofuran, methanol, ethanol, 2-propanol, 2-ethylhexanal, N-methyl-2-pyrrolidone, oleic acid, water, methyl ethyl ketone, cyclohexanone, diethylene glycol, 1,4-dioxane, $\gamma$-butyrolactone, propylene carbonate, 1,2-dibromobenzene, phenyl acetate, benzaldehyde, benzyl alcohol, diethyl carbonate, 2-methyl-1-propanol, acetylacetone, n-hexane, 1,2-dichlorobenzene, 1,2-diethylbenzene, and xylene

[Piercing load]

The flexibility of the resin composition was evaluated based on the piercing load measured by the above-described method. The lower the piercing load, the higher the flexibility of the resin composition. The evaluation criteria in the second embodiment are shown below.

(Evaluation criteria)

A: less than 10 mN

B: 10 mN or more and less than 20 mN

C: 20 mN or more and less than 30 mN

D: 30 mN or more

[Molecular weight]

The number-average molecular weight of each compound was measured by the above-described method.

[Raw material used]

Respective raw materials used in Examples and Comparative Examples according to the second embodiment are as follows.

(Filler)

Graphite: with π electrons, graphite powder, average particle size 10 μm, scaly
Carbon fiber: with π electrons, graphitized carbon fiber, average diameter 10 μm
Carbon nanotube: with π electrons, average diameter 6 nm
Alumina: without π electrons, average particle size 0.25 μm

(Dispersant (B))

As the dispersants (B) used in Examples and Comparative Examples, those synthesized in Synthetic Examples B1 to B9 below were used.

<Synthetic Example B1>

The synthesis was carried out in the same manner as in Synthetic Example A2 above to obtain the dispersant (silicone 1) of Synthetic Example B1. The reaction formula is as shown in Synthetic Example A2.

<Synthetic Example B2>

The synthesis was carried out in the same manner as in Synthetic Example A4 above to obtain the dispersant (silicone 2) of Synthetic Example B2. The reaction formula is omitted since it is the same as Synthetic Example B1, except that the compound of the formula (15) was changed to the compound of n = 70.

<Synthetic Example B3>

The synthesis was carried out in the same manner as in Synthetic Example A1 above to obtain the dispersant (silicone 3) of Synthetic Example B3. The reaction formula is the same as Synthetic Example A1.

<Synthetic Example B4>

The synthesis was carried out in the same manner as in Synthetic Example A3 above to obtain the dispersant (silicone 4) of Synthetic Example B4. The reaction formula is omitted since it is the same as Synthetic Example B3, except that the compound of the formula (15) was changed to the compound of n = 70.

<Synthetic Example B5>

98.6 g of the organosiloxane compound (n = 70) having a hydrosilyl group represented by the formula (16), 5.5 g of (1-pyrene)methylmethacrylate as the monomer, 50 g of toluene as the solvent, and further, 0.01 g of a Karstedt catalyst (platinum catalyst) as the catalyst were reacted in a nitrogen atmosphere at 100°C for 24 hours. Then, the reaction liquid was concentrated with a rotary evaporator and a vacuum dryer to obtain the dispersant (silicone 5) of Synthetic Example B5. The reaction formula is as shown in Synthetic Example A5.

<Synthetic Example B6>

The synthesis was carried out in the same manner as in Synthetic Example A12 above to obtain the dispersant (silicone 6) of Synthetic Example B6. The reaction formula is as shown in Synthetic Example A12.

<Synthetic Example B7>

The synthesis was carried out in the same manner as in Synthetic Example B1, except that the organosiloxane compound of the formula (15) was changed to the compound of n = 70 and the amount of 9-anthracenecarboxyaldehyde was changed to 1.3 g, thereby obtaining the dispersant (silicone 7) of Synthetic Example B7. The reaction formula is omitted since it is the same as Synthetic Example B6, except that the compound of the formula (15) was changed to the compound of n = 70.

<Synthetic Example B8>

The synthesis was carried out in the same manner as in Synthetic Example B1, except that the organosiloxane compound having a hydrosilyl group represented by the formula (16) was changed to the compound of n = 13, and the amount of 1-pyrenecarboxyaldehyde was changed to 18.3 g, thereby obtaining the dispersant (silicone 8) of Synthetic Example B8. The reaction formula is omitted since it is the same as Synthetic Example B5, except that the compound of the formula (16) was changed to the compound of n = 13.

<Synthetic Example B9>

The synthesis was carried out in the same manner as in Synthetic Example A10 to obtain the dispersant (silicone 9) of Synthetic Example B9. The reaction formula is as shown in Synthetic Example A10.

As the dispersants (B) used in Comparative Examples, those described below were also used.

Alkylene oxide (product name: PEO-1, manufactured by Sumitomo Seika Chemicals Company, Limited.)
POVAL (product name: JF-17, manufactured by JAPAN VAM & POVAL CO.,LTD.)
Silicone 10 (Met-TMS): product name: methoxytrimethylsilane, manufactured by Tokyo Kasei Kogyo Co., Ltd.

The aromatic ring as the backbone, Synthetic Example number, number of aromatic rings, and number-average molecular weight of the dispersants (B) used in Examples and Comparative Examples are as shown in Table 3 below.

[Table 3]

| Type | Aromatic ring | Synthetic Example | The number of aromatic rings | Number-average molecular weight |
|---|---|---|---|---|
| Silicone 1 | Perylene | Synthetic Example B1 | 5 | 15300 |
| Silicone 2 | Perylene | Synthetic Example B2 | 5 | 5200 |
| Silicone 3 | Pyrene | Synthetic Example B3 | 4 | 15300 |
| Silicone 4 | Pyrene | Synthetic Example B4 | 4 | 5200 |

(continued)

| Type | Aromatic ring | Synthetic Example | The number of aromatic rings | Number-average molecular weight |
|---|---|---|---|---|
| Silicone 5 | Pyrene | Synthetic Example B5 | 4 | 4800 |
| Silicone 6 | Anthracene | Synthetic Example B6 | 3 | 15200 |
| Silicone 7 | Anthracene | Synthetic Example B7 | 3 | 5200 |
| Silicone 8 | Pyrene | Synthetic Example B8 | 4 | 1300 |
| Silicone 9 | Pyrene | Synthetic Example B9 | 4 | 6200 |
| Alkylene oxide | - | - | 0 | 170000 |
| POVAL | - | - | 0 | 180000 |
| Silicone 10 | - | - | 0 | 136 |

(Resin (C))

Organopolysiloxane, number-average molecular weight 25000
Liquid polybutadiene rubber (product number: L1203, manufactured by KURARAY CO., LTD.)

[Examples B1 to B10, Comparative Examples B1 to B7]

The resin, the dispersant, and the filler were put in a plastic container according to the formulation described in Tables 4 to 6, stirred by vibration at a room temperature (23°C) using a stirring defoaming machine (model name ARE-310) manufactured by THINKY, mixed with hands, and stirred by vibration again to produce a resin composition.

[Table 4]

| | Material | Type | Aromatic ring | π electron | Example B1 | Example B2 | Example B3 | Example B4 | Example B5 |
|---|---|---|---|---|---|---|---|---|---|
| Formulation of resin composition (parts by mass) | Filler (A) | Graphite | - | With | 5.13 | 5.13 | 5.13 | 5.13 | 5.13 |
| | | Carbon fiber | - | With | | | | | |
| | | CNT | - | With | | | | | |
| | | Alumina | - | Without | | | | | |
| | Dispersant (B) | Silicone 1 | Perylene | - | 0.53 | | | | |
| | | Silicone 2 | Perylene | - | | 0.53 | | | |
| | | Silicone 3 | Pyrene | - | | | 0.53 | | |
| | | Silicone 4 | Pyrene | - | | | | 0.53 | |
| | | Silicone 5 | Pyrene | - | | | | | 0.53 |
| | | Silicone 6 | Anthracene | - | | | | | |
| | | Silicone 7 | Anthracene | - | | | | | |
| | | Silicone 8 | Pyrene | - | | | | | |
| | | Silicone 9 | Pyrene | - | | | | | |
| | | Alkylene oxide | - | - | | | | | |
| | | POVAL | - | - | | | | | |
| | | Silicone 10 | - | - | | | | | |
| | Resin (C) | Organopolysiloxane | - | - | 7.02 | 7.02 | 7.62 | 7.02 | 7.62 |
| | | L1203 | - | - | | | | | |
| Property (1) | | $Ra_{D/R}$ (Compatibility of dispersant vs resin) | | | 4.9 | 7 | 0.1 | 0.4 | 4.7 |
| | | $Ra_{D/F}$ (Compatibility of dispersant vs filler) | | | 16.8 | 11.7 | 16.3 | 16.2 | 13.9 |
| Property (2) | | $\|\delta P_{R-D}\|$ (Difference in polarity (resin-dispersant)) | | | 1.5 | 1.8 | 0.1 | 0.2 | 2.1 |
| $\delta P_D$ | | | | | 0.62 | 3.89 | 2.02 | 1.88 | 0.02 |

(continued)

| | Material | Type | Aromatic ring | π electron | Example B1 | Example B2 | Example B3 | Example B4 | Example B5 |
|---|---|---|---|---|---|---|---|---|---|
| Evaluation | | Piercing load | Unit: mN | A: less than 10<br>B: 10 or more and less than 20<br>C: 20 or more and less than 30<br>D: more than 30 | 2 | 7 | 6 | 28 | 8 |
| | | | | | A | A | A | C | A |

[Table 5]

| | Material | Type | Aromatic ring | π electron | Example B6 | Example B7 | Example B8 | Example B9 | Example B10 |
|---|---|---|---|---|---|---|---|---|---|
| Formulation of resin composition (parts by mass) | **Filler** (A) | Graphite | - | With | 5.13 | 5.13 | | | |
| | | Carbon fiber | - | With | | | 5.13 | 5.13 | |
| | | CNT | - | With | | | | | 3 |
| | | Alumina | - | Without | | | | | |
| | Dispersant (B) | Silicone 1 | Perylene | - | | | 0.53 | | |
| | | Silicone 2 | Perylene | - | | | | | |
| | | Silicone 3 | Pyrene | - | | | | 0.53 | 0.48 |
| | | Silicone 4 | Pyrene | - | | | | | |
| | | Silicone 5 | Pyrene | - | | | | | |
| | | Silicone 6 | Anthracene | - | 0.53 | | | | |
| | | Silicone 7 | Anthracene | - | | 0.53 | | | |
| | | Silicone 8 | Pyrene | - | | | | | |
| | | Silicone 9 | Pyrene | - | | | | | |
| | | Alkylene oxide | - | - | | | | | |
| | | POVAL | - | - | | | | | |
| | | Silicone 10 | - | - | | | | | |
| | Resin (C) | Organopolysiloxane | - | - | 7.02 | 7.02 | 7.62 | 7.02 | 6.35 |
| | | L1203 | - | - | | | | | |
| Property (1) | | **Ra** $_{D/R}$ **(Compatibility** of dispersant vs resin) | | | 2.5 | 2.4 | 4.9 | 0.1 | 0.1 |
| | | **Ra** $_{D/F}$ **(Compatibility** of dispersant vs filler) | | | 17.7 | 17.6 | 17.5 | 15.5 | 25.2 |
| Property (2) | | $\lvert\delta P_{R-D}\rvert$ (Difference in polarity (resin-dispersant)) | | | 2 | 1.9 | 1.5 | 0.1 | 0.1 |
| $\delta P_D$ | | | | | 0.16 | 0.21 | 0.62 | 2.02 | 2.02 |

(continued)

| | Material | Type | Aromatic ring | $\pi$ electron | Example B6 | Example B7 | Example B8 | Example B9 | Example B10 |
|---|---|---|---|---|---|---|---|---|---|
| Evaluation | | Piercing load | Unit: mN | A: less than 10<br>B: 10 or more and less than 20<br>C: 20 or more and less than 30<br>D: more than 30 | 25 | 27 | 29 | 18 | 25 |
| | | | | | C | C | C | B | C |

[Table 6]

| | Material | Type | Aromatic ring | $\pi$ electron | Comp. Ex. B1 | Comp. Ex. B2 | Comp. Ex. B3 | Comp. Ex. B4 | Comp. Ex. B5 | Comp. Ex. B6 | Comp. Ex. B7 |
|---|---|---|---|---|---|---|---|---|---|---|---|
| Formulation of resin composition (parts by mass) | Filler (A) | Graphite | - | With | 5.13 | 5.13 | 5.13 | | 5.13 | 5.13 | 5.13 |
| | | Carbon fiber | - | With | | | | | | | |
| | | CNT | - | With | | | | | | | |
| | | Alumina | - | Without | | | | 7.26 | | | |
| | Dispersant (B) | Silicone 1 | Perylene | - | | | | 0.69 | | | |
| | | Silicone 2 | Perylene | - | | | | | | | |
| | | Silicone 3 | Pyrene | - | | | | | 0.48 | | |
| | | Silicone 4 | Pyrene | - | | | | | | | |
| | | Silicone 5 | Pyrene | - | | | | | | | |
| | | Silicone 6 | Anthracene | - | | | | | | | |
| | | Silicone 7 | Anthracene | - | | | | | | | |
| | | Silicone 8 | Pyrene | - | 0.53 | | | | | | |
| | | Silicone 9 | Pyrene | - | | 0.53 | | | | | |
| | | Alkylene oxide | - | - | | | 0.53 | | | | |
| | | POVAL | - | - | | | | | | 0.53 | |
| | | Silicone 10 | - | - | | | | | | | 0.53 |
| | Resin (C) | Organopolysiloxane | - | - | 7.02 | 7.02 | 7.02 | 6.17 | | 7.02 | 7.62 |
| | | L1203 | - | - | | | | | 6.35 | | |
| Property (1) | | **Ra** $_{D/R}$ **(Compatibility** of dispersant vs resin) | | | 5.3 | 4.8 | 15.4 | 4.9 | 12 | 15.7 | 14.8 |
| | | **Ra** $_{D/F}$ **(Compatibility** of dispersant vs filler) | | | 14.6 | 14.7 | 8.5 | 32.2 | 16.3 | 7 | 9.7 |
| Property (2) | | $\lvert\delta P_{R-D}\rvert$ (Difference in polarity (resin-dispersant)) | | | 5.2 | 4.4 | 3.9 | 1.5 | 0.2 | 6.9 | 13.2 |
| $\delta P_D$ | | | | | 7.35 | 6.48 | 6 | 0.62 | 2.02 | 9 | 15.3 |

(continued)

| | Material | Type | Aromatic ring | $\pi$ electron | Comp. Ex. B1 | Comp. Ex. B2 | Comp. Ex. B3 | Comp. Ex. B4 | Comp. Ex. B5 | Comp. Ex. B6 | Comp. Ex. B7 |
|---|---|---|---|---|---|---|---|---|---|---|---|
| Evaluation | | Piercing load | Unit: mN | A: less than 10<br>B: 10 or more and less than 20<br>C: 20 or more and less than 30<br>D: more than 30 | 63 | 49 | 70 | 93 | 90 | 80 | 60 |
| | | | | | D | D | D | D | D | D | D |

In the resin compositions of Examples B1 to B10 described above, both the solubility index Ra and the polarity parameter term δP between two components satisfied the predetermined requirements, and the flexibility of the resin composition was improved.

In contrast, in the resin compositions produced in Comparative Examples B1 to B7, at least any of the solubility index Ra and the polarity parameter term δP between two components did not satisfy the predetermined requirements, and the flexibility of the resin composition was not sufficiently excellent even when the dispersant (B) was used in combination with the filler (A) and the organopolysiloxane resin (C).

## Claims

1. A silicone resin composition comprising a filler (A) having a six-membered ring atomic structure as a structural unit, an organopolysiloxane (B) having a structure represented by the following formula (1), and an organopolysiloxane (C) having a structure different from the organopolysiloxane (B):

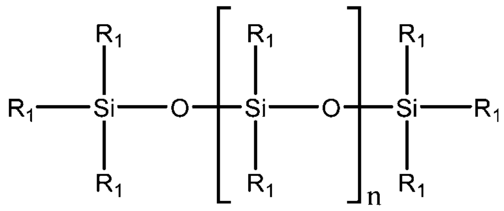

Formula (1)

wherein each $R_1$ is independently a group represented by A-B, a monovalent hydrocarbon group having 1 to 4 carbon atoms, or a hydrogen atom,
at least one $R_1$ is a group represented by A-B and at least one $R_1$ is a hydrocarbon group among a plurality of $R_1$,
A is a divalent organic group bonded to a silicon atom, and B has three or more and six or less conjugated aromatic six-membered rings,
in a case of an atom bonded to the aromatic six-membered ring contained in B being defined as an α-position atom, an atom bonded to the α-position atom being defined as a β-position atom, and an atom bonded to the β-position atom other than the α-position atom being defined as a γ-position atom among atoms constituting A, any of the α-position atom, the β-position atom, and the γ-position atom is a heteroatom, and
the letter of n is an integer of 1 or more.

2. The silicone resin composition according to claim 1, wherein the organopolysiloxane (B) has a structure represented by the following formula (2):

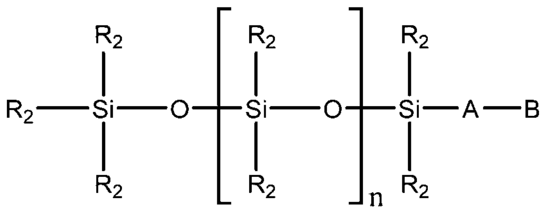

Formula (2)

wherein $R_2$ is a monovalent hydrocarbon group having 1 to 4 carbon atoms or a hydrogen atom, A, B, and the letter of n have the same meanings as those in the formula (1), and at least one $R_2$ among a plurality of $R_2$ is a hydrocarbon group.

3. The silicone resin composition according to claim 1, wherein the organopolysiloxane (B) has a structure represented by the following formula (3):

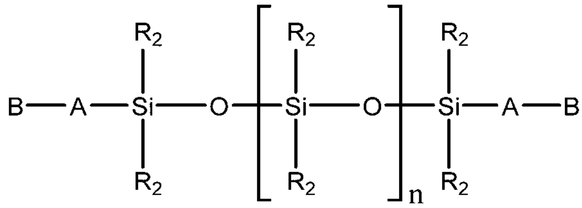 Formula (3)

wherein $R_2$ is a monovalent hydrocarbon group having 1 to 4 carbon atoms or a hydrogen atom, A, B, and the letter of n have the same meanings as those in the formula (1), and at least one $R_2$ among a plurality of $R_2$ is a hydrocarbon group.

4. The silicone resin composition according to claim 1, wherein the organopolysiloxane (B) has a structure represented by the following formula (4):

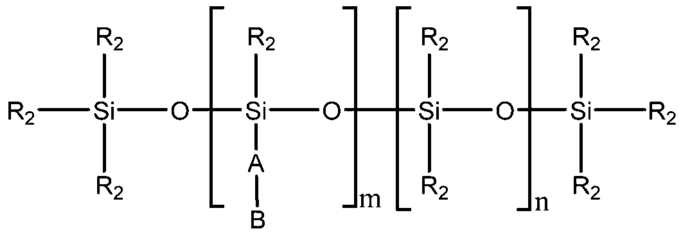 Formula (4)

wherein $R_2$ is a monovalent hydrocarbon group having 1 to 4 carbon atoms or a hydrogen atom, the letter of m is an integer of 1 or more and 10 or less, A, B, and the letter of n have the same meanings as those in the formula (1), and at least one $R_2$ among a plurality of $R_2$ is a hydrocarbon group.

5. The silicone resin composition according to claim 4, wherein the letter of m is 1 or 2.

6. The silicone resin composition according to any one of claims 1 to 5, wherein B is a condensed ring compound.

7. The silicone resin composition according to claim 6, wherein B contains a pyrene substituent or a perylene substituent.

8. The silicone resin composition according to any one of claims 1 to 5, wherein A has 10 or less carbon atoms.

9. The silicone resin composition according to any one of claims 1 to 5, wherein a value X calculated by the following equation is $1 \times 10^{-6}$ or more and $1 \times 10^{-4}$ or less:

X = {(the number of conjugated aromatic rings per molecule of component (B)) ÷ (number-average molecular weight of component (B)) × (content of component (B) [parts by mass])} ÷ {(specific surface area of component (A) [$cm^2/g$]) × (content of component (A) [parts by mass])}.

10. The silicone resin composition according to any one of claims 1 to 5, comprising a filler (D) selected from the group consisting of a metal oxide filler and a metal filler.

11. The silicone resin composition according to claim 1 or 2, wherein the organopolysiloxane resin (C) is at least one of an organopolysiloxane having an alkenyl group and an organopolysiloxane having a hydrosilyl group.

12. The silicone resin composition according to claim 1 or 2, wherein

the filler (A) has $\pi$ electrons, and
a solubility index Ra and a polarity parameter term $\delta P$ between two components calculated by Hansen solubility parameters (HSP) satisfy the following requirements (1) and (2):
requirement (1):
Ra(D/R) as a compatibility index of the organopolysiloxane (B) with the organopolysiloxane (C) is 0.01 or more and 10.0 or less, and Ra(D/F) as a compatibility index of the filler (A) with the organopolysiloxane (B) is 8.6 or more

and 30.0 or less, and
requirement (2):
a difference in polar term δP between the organopolysiloxane (B) and the organopolysiloxane (C) (|δPR-D|) is 4.2 or less.

**13.** A resin composition comprising a filler (A) having π electrons and having a six-membered ring atomic structure as a structural unit, a dispersant (B) that is an organopolysiloxane, and an organopolysiloxane resin (C) having a structure different from the dispersant (B),
a solubility index Ra and a polarity parameter term δP between two components calculated by Hansen solubility parameters (HSP) satisfying the following requirements (1) and (2):

requirement (1):
Ra(D/R) as a compatibility index of the dispersant (B) with the organopolysiloxane resin (C) being 0.01 or more and 10.0 or less, and Ra(D/F) as a compatibility index of the filler (A) with the dispersant (B) being 8.6 or more and 30.0 or less, and
requirement (2):
a difference in polar term δP between the dispersant (B) and the organopolysiloxane resin (C) (|δPR-D|) being 4.2 or less.

## INTERNATIONAL SEARCH REPORT

International application No.
**PCT/JP2024/003486**

### A. CLASSIFICATION OF SUBJECT MATTER

***C08L 83/04***(2006.01)i; ***C08G 77/38***(2006.01)i
FI: C08L83/04; C08G77/38

According to International Patent Classification (IPC) or to both national classification and IPC

### B. FIELDS SEARCHED

Minimum documentation searched (classification system followed by classification symbols)

C08L83/04; C08G77/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2018-197300 A (NIIGATA UNIV.) 13 December 2018 (2018-12-13)<br>claims, paragraphs [0001]-[0002], [0021]-[0027], [0042], examples | 13<br>1-12 |
| A | JP 2005-509914 A (HONEYWELL INTERNATIONAL, INC.) 14 April 2005 (2005-04-14) | 1-13 |
| A | GARDINIER, Wendy E. et al. Temperature-Dependent Tail-Tail Dynamics of Pyrene-Labeled Poly(dimethylsiloxane) Oligomers Dissolved in Ethyl Accetate. J. Phys. Chem. B. 2005, 109, 14824-14829 | 1-13 |
| A | CN 115286925 A (ZHEJIANG BAORUN APPLIED MATERIALS CO., LTD.) 04 November 2022 (2022-11-04) | 1-13 |
| P, A | CN 117209773 A (GUANGZHOU JOINTAS CHEMICAL CO., LTD.) 12 December 2023 (2023-12-12) | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/003486**

**Box No. III Observations where unity of invention is lacking (Continuation of item 3 of first sheet)**

This International Searching Authority found multiple inventions in this international application, as follows:

Document 1: JP 2018-197300 A (NIIGATA UNIV.) 13 December 2018 (2018-12-13) examples (Family: none)

Claims are classified into the following two inventions.

(Invention 1) Claims 1-12

Claims 1-12 have the special technical feature of a "silicone resin composition comprising: a filler (A) having a six-membered ring atomic structure as a structural unit; organopolysiloxane (B) having a structure represented by the following formula (1); and organopolysiloxane (C) having a structure different from that of the organopolysiloxane (B)" (formula (1) is omitted) and are thus classified as invention 1.

(Invention 2) Claim 13

Claim 13 shares, with claim 1 classified as invention 1, the common technical feature of "resin composition comprising: a filler (A) having a six-membered ring atomic structure as a structural unit; organopolysiloxane (B); and organopolysiloxane (C) having a structure different from that of the organopolysiloxane (B)." However, said technical feature does not make a contribution over the prior art in light of the disclosure (in particular, see Example) of document 1 and thus cannot be said to be a special technical feature. Also, there are no other same or corresponding special technical features between claim 13 and claim 1.

In addition, claim 13 is not dependent on claim 1. Furthermore, claim 13 is not substantially identical to or similarly closely related to any of the claims classified as invention 1.

Therefore, claim 13 cannot be classified as invention 1.

Also, claim 13 has the special technical feature of a "resin composition comprising: a filler (A) having π electrons and a six-membered ring atomic structure as a structural unit; a dispersant (B) consisting of organopolysiloxane; and organopolysiloxane resin (C) having a structure different from that of the dispersant (B), wherein the solubility index Ra between the two components calculated by the Hansen solubility parameter (HSP) and the polarity parameter term δP satisfy the following requirements (1) and (2)" (requirements (1) and (2) are omitted) and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2024/003486**

| Patent document cited in search report | Publication date (day/month/year) | Patent family member(s) | Publication date (day/month/year) |
|---|---|---|---|
| JP 2018-197300 A | 13 December 2018 | (Family: none) | |
| JP 2005-509914 A | 14 April 2005 | JP 2005-509913 A | |
| | | JP 2009-282524 A | |
| | | JP 2003-502449 A | |
| | | US 2002/0095018 A1 | |
| | | US 6268457 B1 | |
| | | US 6365765 B1 | |
| | | US 6506497 B1 | |
| | | US 2014/0227538 A1 | |
| | | US 2002/0055000 A1 | |
| | | US 2002/0128388 A1 | |
| | | US 2003/0120018 A1 | |
| | | US 2005/0245717 A1 | |
| | | WO 2003/044079 A1 | |
| | | WO 2003/044078 A1 | |
| | | WO 2000/077575 A1 | |
| | | WO 2004/044025 A2 | |
| | | EP 1478682 A1 | |
| | | EP 1478683 A1 | |
| | | EP 1190277 A1 | |
| | | KR 10-2005-0042068 A | |
| | | KR 10-0897575 B1 | |
| | | KR 10-2005-0044501 A | |
| | | CN 1615332 A | |
| | | CN 1615333 A | |
| | | AU 2002336709 A | |
| | | AU 2002359387 A | |
| | | TW 200302259 A | |
| | | TW 200306342 A | |
| | | AU 5600200 A | |
| | | CA 2374944 A | |
| | | KR 10-2006-0097744 A | |
| | | AT 445176 T | |
| | | KR 10-0705849 B1 | |
| | | TW 200833799 A | |
| | | AU 2003295517 A | |
| | | TW 200426199 A | |
| CN 115286925 A | 04 November 2022 | (Family: none) | |
| CN 117209773 A | 12 December 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018197300 A
- JP 2016534161 W


### Non-patent literature cited in the description


- **CHARLES M. HANSEN**. Hansen Solubility Parameters: A Users Handbook. CRC press, 2007
- **C. M. HANSEN** ; **A. L. SMITH**. Using Hansen Solubility Parameters to correlate Solubility of C60 fullerene in organic Solvents And in Polymers. *Carbon*, 2004, vol. 42, 1591-1597